# EUROPÄISCHE PATENTSCHRIFT

(11) **EP 3 676 163 B1**
(45) Veröffentlichungstag und Bekanntmachung des Hinweises auf die Patenterteilung: **15.07.2026**
(21) Anmeldenummer: 18788885.4
(22) Anmeldetag: 28.08.2018
(51) Int. Cl.: B62J 3/00, B62J 6/00

(54) **ELEKTROFAHRRAD MIT KOMMUNIKATIONSSYSTEM**
ELECTRIC BICYCLE WITH COMMUNICATION SYSTEM
VÉLO ÉLECTRIQUE ÉQUIPÉ D'UN SYSTÈME DE COMMUNICATION

(30) Priorität: 29.08.2017 CH 10692017
(43) Veröffentlichungstag der Anmeldung: 08.07.2020
(73) Patentinhaber: myStromer AG, 3173 Oberwangen b. Bern (CH)
(72) Erfinder: ISENSCHMID, Dominic, 3145 Niederscherli (CH); WIEDMER, Christophe, 3324 Hindelbank (CH); EGLI, Peter, 3053 Münchenbuchsee (CH)
(74) Vertreter: IPrime Rentsch Kaelin AG
(86) Internationale Anmeldenummer: PCT/IB2018/056555
(87) Internationale Veröffentlichungsnummer: WO 2019/043576

(56) Entgegenhaltungen:
- EP-A1- 2 829 464
- CN-U- 205 769 803
- CN-Y- 201 405 970
- DE-A1- 102015 111 980
- DE-U- 1 689 342
- US-A1- 2015 295 993
- US-A1- 2016 086 489
- A L SCHWAB ET AL: "Dynamics and Control of a Steer-by-Wire Bicycle", 1 November 2013 (2013-11-01), pages 11 - 13, XP055527506, Retrieved from the Internet <URL:http://bicycle.tudelft.nl/schwab/Publications/schwab2013dynamics.pdf> [retrieved on 20181127]

## Beschreibung

Die vorliegende Erfindung betrifft ein Elektrofahrrad mit einem Kommunikationssystem gemäss Oberbegriff des Patentanspruchs 1.

### Technologischer Hintergrund

Elektrofahrräder, auch Pedelecs oder Leicht-Elektrofahrzeuge genannt, sind aus dem Stand der Technik bekannt. Sie beziehen ihre Antriebsenergie sowie Energie für Hilfsaggregate aus Energiespeichervorrichtungen, wie wieder aufladbaren Batterien bzw. Akkumulatoren, kurz "Akku" genannt. Insbesondere wenn die Fahrzeuge als Elektrofahrräder oder Elektromotorräder ausgestaltet sind, kann zusätzliche Antriebsenergie mit Hilfe eines vom Fahrer betätigten Pedalantriebs erzeugt werden. Die Akkumulatoren sind häufig austauschbar oder zumindest wiederlösbar am oder im Fahrzeug angebracht, damit sie vom Fahrzeug getrennt elektrisch aufgeladen oder zum Wechseln aus Wartungsgründen oder zum Ersatz durch einen geladenen Akkumulator möglichst einfach ausgetauscht werden können.

Aus dem Stand der Technik bekannte Elektrofahrräder können elektronische Steuereinheiten aufweisen, die der Bedienung der Elektrofahrräder durch den Fahrer dienen und zusätzliche Kommunikationsfunktionen ermöglichen helfen können, wie beispielsweise einen Standort des Elektrofahrrads zu lokalisieren. Zu Bedienung stehen dem Fahrer beispielsweise an der Steuereinheit selber angebrachte oder signalübertragend mit der Steuereinheit verbundene Bedienelemente zur Verfügung, die beispielsweise in Form von Knöpfen an einem Lenker des Elektrofahrrads angeordnet sind.

Beispielsweise weist ein in DE10 2015 111980 A1 beschriebenes elektrisches Zweirad einen Motor und eine Steuerung auf. Ein Herzfrequenzmonitor ist zum Kommunizieren eines Herzfrequenzsignals, das eine Herzfrequenz eines Fahrgasts darstellt, an die Steuerung programmiert. Die Steuerung ist zum Empfangen einer Zielortentfernung des elektrischen Zweirads gegenüber einem vorbestimmten Zielort programmiert.

Die Steuerung ist zum Bereitstellen einer Anweisung zum Anpassen der Stromversorgung des Motors mindestens auf der Grundlage des Herzfrequenzsignals und der Zielortentfernung programmiert.? 1'b A. L. Schwab et al. "Dynamics and Control of a Steerby-Wire Bicycle"; 1. November2013; XP055527506; beschreiben ein Fahrrad mit einem drahtgebundenen Steuerungs-system.

Zur optischen Darstellung zu bedienender Parameter und Einstellung des Elektrofahrrads können die Steuereinheiten optische Anzeigen bzw. Displays aufweisen. Um seiner Handlungen bezüglich der zu bedienenden Parameter und Einstellungen auf der optischen Anzeige zu verfolgen, muss der Fahrer seinen Blick auf die Anzeige richten, wodurch er in der Wahrnehmung seiner Umwelt eingeschränkt ist, was insbesondere während des Fahrens des Elektrofahrrads Sicherheitsrisiken birgt.

### Darstellung der Erfindung

Eine Aufgabe der Erfindung besteht darin mindestens einige der Nachteile des Standes zu vermeiden. Insbesondere besteht eine Aufgabe der Erfindung darin, aus einer Ablenkung des Fahrers von seiner Umwelt resultierende Sicherheitsrisiken beim Fahren eines Elektrofahrrades zu verringern und den Fahrkomfort zu erhöhen.

Diese Aufgabe wird durch die Merkmale des unabhängigen Patentanspruchs 1 gelöst. Insbesondere wird die der Erfindung zugrundeliegende Aufgabe durch ein Elektrofahrrad mit einem Komm unikationssystem gelöst, das wenigstens ein elektronisches Verarbeitungsmodul zur Verarbeitung von Informationen für den Fahrer des Elektrofahrrades, und wenigstens eine Signalvorrichtung zur Bereitstellung der verarbeiteten Informationen an den Fahrer umfasst, wobei die wenigstens eine Signalvorrichtung ausgebildet ist, die Informationen zur spontanen Beeinflussung des Fahrers als vom Elektrofahrrad abgegebenes taktiles, optisches, und/oder akustisches Signal auszugeben. Zudem ist eine Klimatisierungsvorrichtung vorgesehen, die wenigstens ein Heizelement und ein Kühlelement zum Heizen bzw. Kühlen eines Griffes umfasst, wobei die Klimatisierungsvorrichtung im Griffbereich eine Funktion in Abhängigkeit eines ordnungsgemässen Umgreifens steuert, indem eine Klimatisierungsfunktion der Klimatisierungsvorrichtung unterbunden wird, wenn wenigstens ein Griff nicht umgriffen ist,

Die vorgeschlagene Lösung hat den Vorteil, dass der Fahrer das taktile, optische und/oder akustische Signal unmittelbar wahrnehmen kann, ohne seine Aufmerksamkeit bzw. sein Augenmerk von der Umweltweg zu richten. Mittels des Signals kann er vom Elektrofahrrad Rückmeldungen bezüglich Bedienung des Elektrofahrrads und/oder weitere Informationen erhalten, die bei der Bedienung sowie dem Fahren des Elektrofahrrads von Interesse oder sogar wesentlich sein können. Somit hilft die vorgeschlagene Lösung, beim Fahren des Elektrofahrrades die Sicherheit des Fahrers selber sowie die allgemeine Sicherheit zu erhöhen.

Mit Hilfe der taktilen Sensorelemente können die oben genannten Bedienfunktionen am Kommunikationssystem selber bzw. an mit dem Kommunikationssystem datenübertragend verbundenen Mobilgeräten, Datenspeichern und medizinischen Vorrichtungen durchgeführt werden. Die taktilen Sensorelemente bilden somit Bedienelemente für das Kommunikationssystem sowie die damit datenübertragend verbundenen Mobilgeräten, Datenspeicher und/oder medizinischen Vorrichtungen.

Die vorgeschlagene Lösung kann durch die folgenden weiteren, jeweils für sich vorteilhaften Ausführungsformen beliebig ergänzt und weiter verbessert werden:
Gemäss einer Ausführungsform ist vorgesehen, dass das Verarbeitungsmodul Teil einer zentralen elektronischen Steuereinheit des Elektrofahrrads und/oder informationsübertragend mit der Steuereinheit verbunden ist. Somit ist das Verarbeitungsmodul in die Steuereinheit eingebunden oder zumindest eng an die Steuereinheit angebunden, was dabei hilft, für das Kommunikationssystem relevante Daten zentral mit Hilfe des Verarbeitungsmoduls zu verwalten und eine Signalabgabe durch die Signalvorrichtung sowohl für Steuerungsdaten für das Elektrofahrrad selber als auch zusätzliche Daten betreffend Zusatzinformationen zu ermöglichen, die nicht unmittelbar mit Steuerungsdaten des Fahrrads, wie beispielsweise einer gewählten Antriebs- bzw. Unterstützungsstufe oder Rekuperationsstufe des Elektroantriebs, oder einem Ladezustand der Energiespeichervorrichtung zusammenhängen.

Gemäss einer Ausführungsform ist vorgesehen, dass das Elektrofahrrad mit einer Antriebsenergie bereitstellenden Energiespeichervorrichtung ausrüstbar ist, wobei das Kommunikationssystem betriebsenergieempfangend mit der Energiespeichervorrichtung verbunden ist. Die Energiespeichervorrichtung kann eine Antriebsbatterie und eine Stützbatterie beinhalten. Aus der Antriebsbatterie können beispielsweise im Wesentlichen sämtliche elektrischen bzw. elektronischen Komponenten des Elektrofahrrads mit elektrischer Energie gespeist werden. Die Stützbatterie kann insbesondere dazu dienen, das Kommunikationssystem weiter mit Energie zu versorgen, wenn beispielsweise die Antriebsbatterie entladen ist oder wenn die Antriebsbatterie zum Aufladen vom Elektrofahrrad getrennt ist. Durch die Anbindung des Kommunikationssystems an die Energiespeichervorrichtung kann das Komm unikationssystem zuverlässig und in der Regel stets ausreichend mit elektrischer Energie versorgt werden. Zusätzlich können dem Komm unikationssystem einfach den Zustand der Energiespeichervorrichtung betreffende Informationen zur Verfügung gestellt werden.

Gemäss einer Ausführungsform ist vorgesehen, dass das Kommunikationssystem zumindest teilweise in einen Lenker und/oder Vorbau des Elektrofahrrads integriert ist. Somit können die taktilen, optischen und/oder akustischen Signale im üblichen Sicht-, Tast-und/oder Hörbereich des Fahrers bereitgestellt werden, wodurch dieser möglichst wenig Ablenkung von seiner Umgebung erfährt. Auch erleichtert eine zumindest teilweise Anordnung des Kommunikationssystems im Bereich des Lenkers und/oder Vorbaus des Elektrofahrrads eine akustische und/oder taktile Bedienung des Kommunikationssystems durch den Fahrer.

Gemäss einer Ausführungsform ist vorgesehen, dass das Kommunikationssystem zumindest teilweise in einen Rahmen des Elektrofahrrads integriert ist. Beispielsweise können zumindest Energie-und/oder Datenübertragungsleitungen für das Kommunikationssystem im Rahmen untergebracht sein. Auch kann die Steuereinheit in den Rahmen integriert sein. Eine Integration der Leitungen sowie der Steuereinheit in den Rahmen vereinfacht, diese von schädlichen Umwelteinflüssen, wie Nässe, Feuchte und mechanischen Einwirkungen zu schützen und zudem einen ansprechenden ästhetischen Eindruck des Elektrofahrrads zu schaffen. Auch hilft die Integration, Sicherheitsrisiken zu verringern, weil die Leitungen und die Steuereinheit sich beispielsweise nicht beim Fahren in Gegenständen entlang des Fahrweges verfangen oder gegen diese schlagen können. Nicht zuletzt hilft die Integration, einen Diebstahl der integrierten Teile des Kommunikationssystems sowie der Steuereinheit zu erschweren.

Gemäss einer Ausführungsform ist vorgesehen, dass die wenigstens eine Signalvorrichtung ausgebildet ist, ein Signal auszugeben, wenn die Information eine Gefahrensituation repräsentiert. So kann das Verarbeitungsmodul des Kommunikationssystems dazu ausgebildet sein, Gefahrensituationen und/oder als Informationen betreffend eine Gefahrensituation enthaltende Daten zu erkennen und folglich die Signalvorrichtung dazu veranlassen, ein bestimmtes Signal, beispielsweise ein Warnsignal, auszugeben, das eine Gefahrensituation repräsentiert. Somit kann der Fahrer vorGefahrensituationen gewarnt werden, was dabei hilft, Sicherheitsrisiken beim Fahren eines Elektrofahrrads weiter zu verringern.

Gemäss einer Ausführungsform ist vorgesehen, dass das Kommunikationssystem mindestens einen Näherungssensor zur Erfassung eines sich nähernden Objektes aufweist, wobei der Näherungssensor signalübertragend mit dem Verarbeitungsmodul verbunden ist. Beispielsweise kann ein Näherungssensor im Bereich des Lenkers in Fahrtrichtung weisend und/oder im hinteren Bereich des Elektrofahrrads, beispielsweise im Bereich einer Rückleuchte des Elektrofahrrads angeordnet sein. Somit kann mit Hilfe der Näherungssensoren einer vorwärtige bzw. rückwärtige Näherungsinformation betreffend bestimmte Objekte erfasst und an das Kommunikationssystem weitergeleitet werden. Auch können seitwärtige Informationen mit entsprechend seitwärts ausgerichteten Näherungssensoren erfasst werden, die sowohl im Bereich des Lenkers als auch im Bereich des hinteren Teils des Elektrofahrrads angeordnet sein können.

Gemäss einer Ausführungsform ist vorgesehen, dass das Verarbeitungsmodul zur Verarbeitung von Richtungsinformationen und/oder Abstandsinformationen ausgebildet ist. Richtungsinformationen und/oder Abstandsinformationen können beispielsweise über die Näherungssensoren ermittelt werden. Alternativ oder zusätzlich können die Richtungsinformationen und/oder Abstandsinformationen von externen Informationsquellen an das Verarbeitungsmodul übertragen werden. Mit Hilfe der Richtungsinformationen und/oder Abstandsinformationen können entsprechende Richtungs- bzw. Abstandssignale über die Signalvorrichtung dem Fahrer bereitgestellt werden, wobei sich bei den Richtungs- bzw. Abstandssignalen auch um Warnsignale handeln kann.

Beispielsweise kann ein Abstandssignal abgegeben werden, wenn eine Abstandsinformation eines Objektes vor oder hinter dem Elektrofahrrad dazu veranlasst. Dieses Abstandssignal kann ein Signal sein, das dazu dient, den Fahrer darauf aufmerksam zu machen, dass sich ein hinter ihm befindliches Objekt, beispielsweise ein weiterer Fahrer bzw. ein Mitglied einer Gruppe von Fahrern über einen gewissen Abstand hinaus von ihm entfernt hat. Eine derartige Abgabe eines Abstandssignals ist insbesondere dabei hilfreich, zwei Fahrer oder Gruppen von Fahrern möglichst beisammen zu halten bzw. zu verhindern, dass diese sich verlieren.

Ein Abstandssignal in Form eines Warnsignales kann signalisieren, wenn sich ein Objekt, wie ein anderes Elektrofahrrad oder ein Automobil oder Lastkraftwagen in gefährlicher Weise dem Elektrofahrrad nähert. Somit kann ein derartiges Warnsignal den Fahrer dazu veranlassen, eine Ausweichbewegung einzuleiten, beispielsweise wenn das Warnsignal darauf hinweist, dass sich von hinten ein Objekt nähert, wie es oft der Fall ist, wenn Elektrofahrräder auf von sämtlichen Verkehrsteilnehmern genutzten Strassen bewegt werden und dort schnellere bzw. stärker als das Elektrofahrrad motorisierte Verkehrsteilnehmer zu einem Überholvorgang ansetzen. Die Warnung des Fahrers vor dem Überholvorgang kann dabei helfen, Überreaktionen des Fahrers, beispielsweise durch eine übermässig starke Lenkbewegung zum Einleiten eines Ausweichvorganges zu vermeiden.

Eine weitere häufig beobachtete Situation, bei dem ein derartiges Warnsignal hilfreich sein kann, herrscht vor, wenn der Fahrer über Kopfhörer bzw. Ohrstecker Musik aus einem tragbaren elektronischen Gerät, wie beispielsweise einem Walkman, MP3-Player, Tablett-PC oder Mobiltelefon hört oder mit dem Mobiltelefon telefoniert. In diesem Falle ist eine akustische Wahrnehmung der Umwelt des Fahrers durch den Fahrer oftmals stark beeinträchtigt, was dazu führt, dass er sich ihm insbesondere von hinten nähernde Fahrzeuge nicht oder nur relativ spät wahrnimmt, beispielsweise wenn diese sich bereits neben ihm befinden. Dann kann der Fahrer dazu neigen, sich zu erschrecken und somit spontan übersteuernde Lenkbewegungen einzuleiten, was die Fahrstabilität beeinträchtigen oder ihn auf Kollisionskurs mit weiteren Objekten bringen kann.

Auch häufig wird in solchen Situationen beobachtet, das zum Überholvorgang ansetzende Fahrzeuge ihrerseits akustische Warnsignale abgeben, beispielsweise indem ihre Hupe betätigt wird, um den Fahrer freundlich über den geplanten Überholvorgang in Kenntnis zu setzen oder sich rüde oder sogar auf nötigende Art und Weise Platz schaffen zu wollen, was ein gewisses Konfliktpotential zwischen dem Fahrer und dem anderen Verkehrsteilnehmer birgt. Selbst wenn der Fahrer in derartigen Situationen im Hinblick auf jeweilige verkehrsrechtliche Regelungen im Recht wäre, so kann eine rechtzeitige Warnung mit Hilfe eines Kommunikationssystems helfen, derartige Konfliktsituationen von vornherein zu vermeiden und daher daraus resultierende Risiken für den Fahrer und die anderen Verkehrsteilnehmer zu verringern.

Gemäss einer Ausführungsform ist vorgesehen, dass das Verarbeitungsmodul zur Verarbeitung von Navigationsinformationen ausgebildet ist. Die Navigationsinformationen können somit an die Signalvorrichtung weitergegeben werden. Die Signalvorrichtung kann die Navigationsinformationen dem Fahrer bereitstellen. Beispielsweise kann es sich bei den Navigationsinformationen um Annäherungsinformationen handeln, beispielsweise wenn der Fahrer sich einem in einem Navigationssystem angegebenen Ziel oder Zwischenziel, wie einer Abzweigung, nähert. Navigationssysteme arbeiten in der Regel mit akustischen und/oder optischen Signalen bzw. Kartendarstellungen. Derartige Signale können insbesondere beim Fahren eines Elektrofahrrades problematisch sein, weil sie die Aufmerksamkeit des Fahrers beanspruchen bzw. ihn von seiner Fahrwegs-und/oder Verkehrssituation ablenken können. Daher ist insbesondere im Fall von Navigationsinformationen von Vorteil, wenn das Verarbeitungsmodul die Navigationsinformationen in Signale umsetzt, welche die Signalvorrichtung dazu veranlassen, taktile Signale an den Fahrer abzugeben. Die Taktilen Signale kann der Fahrer wahrnehmen, ohne dass seine optische und/oder akustische Wahrnehmung seiner Umwelt dadurch eingeschränkt wird, was dabei hilft, Sicherheitsrisiken weiter zu minimieren.

Gemäss einer Ausführungsform ist vorgesehen, dass das Signal ein Lichtsignal, ein Schwingungssignal, eine Lenkwiderstandsänderung und/oder eine Temperaturänderung umfasst. Ein Lichtsignal kann durch ein oder mehrere Leuchtelemente bereitgestellt werden. Verschiedene Leuchtelemente können dazu dienen, jeweils verschiedenartige Lichtsignale abzugeben. So kann beispielsweise eine Vielzahl von Leuchtelemente an verschiedenen Orten des Lenkers angebracht sein, wie links, rechts, vorund hinter einer Lenkachse bzw. einem Gabelschafts des Fahrrads, um entsprechend in Fahrtrichtung nach links oder rechts bzw. vorne oder hinten zu deuten. Gleiches gilt für Schwingungssignale, die in der Regel als Vibrationen durch entsprechende Schwingungsgeber erzeugt werden. Lenkwiderstandsänderungen können dazu dienen, einen Lenkeinschlag nach links oder rechts zu begünstigen oder zu erschweren. Temperaturänderungen können ebenfalls richtungsgebunden oder richtungsungebunden zur Signalisierung herbeigeführt werden.

Gemäss einer Ausführungsform ist vorgesehen, dass die Signalvorrichtung dazu ausgestaltet ist, mit Schwingungselementen am Lenker, in den Pedalen und/oder dem Sattel des Elektrofahrrads zusammenzuwirken. Wie bereits oben erwähnt, können insbesondere eine Vielzahl von am Lenker angebrachten Schwingungselementen dazu dienen, Schwingungssignale zu erzeugen, die richtungsgebunden oder richtungsungebunden situationsabhängige Informationen an den Fahrer übermitteln. Unterschiedliche Schwingungsmuster können zur Signalisierung unterschiedlicher Informationen, beispielsweise Navigationsanweisungen an den Fahrer dienen.

Die Schwingungssignale können in Form von Vibrationen unterschiedlicher Intervalllängen erzeugt werden. Beispielsweise kann so eine Intervallverkürzung eine Annäherung an ein Ziel, ein Zwischenziel oder ein Objekt signalisieren. Gleiches gilt für am Sattel angebrachte Schwingungselemente, wobei insbesondere am Sattel erzeugte Schwingungssignal richtungsungebunden auf ein bestimmtes Ereignis hinweisen können. An den Pedalen erzeugte Schwingungssignale eignen sich wiederum insbesondere für richtungsgebundene Informationen, die dem linken oder rechten Pedal zugeordnet sind.

Gemäss einer Ausführungsform ist vorgesehen, dass die Signalvorrichtung ausgebildet ist, mit wenigstens zwei Schwingungselementen zusammenzuwirken, die Lenkergriffen des Elektrofahrrads zugeordnet sind. Die Lenkergriffe sind beim Fahren des Elektrofahrrads in der Regel von den Händen des Fahrers umgriffen. Somit eignen sich insbesondere die Lenkergriffe dazu, Schwingungssignale, wie Vibrationen, als taktile Signale für den Fahrer bereitzustellen. Dazu können die Schwingungselemente in die Lenkergriffe integriert sein. Das Kommunikationssystem ist vorteilhafterweise dazu ausgebildet, insgesamt wenigstens zwei Schwindungselemente, also jeweils ein Schwingungselement, das jeweils einem der Lenkergriffe zugeordnet ist, unabhängig voneinander anzusteuern.

Gemäss einer Ausführungsform ist vorgesehen, dass die Signalvorrichtung ausgebildet ist, den Lenkwiderstand mittels eines Lenkmomentbeeinflussungselements zu beeinflussen. Das Lenkmomentbeeinflussungselement kann beispielsweise im Bereich des Gabelschaftes angeordnet sein und dazu dienen, den Lenkwiderstand zu erhöhen oder zu senken. Beispielsweise kann vorgesehen sein, dass die Signalvorrichtung ausgebildet ist, den Lenkwiderstand nur in Richtung auf das sich rückwärtig nähernde Fahrzeug oder in Richtung auf die voraussichtliche Fahrtstrecke des sich rückwärtig nähernden Fahrzeuges entlang des Fahrrades zu erhöhen.

Auch können Lenkwiderstand erhöht werden, wenn das Kommunikationssystem erfasst, dass eine oder beide Hände des Fahrers sich nicht an den Lenkergriffen befinden. Somit kann das Lenkmomentbeeinflussungselements dabei helfen, den Lenkeinschlag zu stabilisieren bzw. als eine Art Lenkungsdämpfer dienen, der ein Aufschwingen oder andersartiges ausser Kontrolle geraten des Lenkers verhindern helfen kann.

Die wenigstens eine Signalvorrichtung ist beispielsweise dazu ausgebildet, den Lenkwiderstand in eine Lenkrichtung zu erhöhen, wenn die Information eine Richtungsänderung in dieser oder in der entgegengesetzten Lenkrichtung repräsentiert. Das Kommunikationssystem kann weiterhin dazu ausgebildet sein, vorbestimmte Muster sich zeitlich ändernder Lenkwiderstandsänderungen zu erzeugen, um Informationen an den Fahrer auszugeben. Auch kann die wenigstens eine Signalvorrichtung dazu ausgebildet sein, den Lenkwiderstand so zu erhöhen, dass ein Fahren mit dem Fahrrad erheblich beeinträchtigt wird, wenn das Verarbeitungsmodul eine unberechtigte Nutzung des Fahrrades signalisiert. So kann beispielsweise bei der Signalisierung eines Diebstahls oder eines Diebstahlversuchs bzw. mangelnder Entsperrung des Elektrofahrrads bei erfolgloser Abstimmung von Sicherungsschlüsseln und/oder Fahrzeugkennungen der Lenker vollständig blockiert sein, in einer Art, wie es beispielsweise von Lenkradschlössern in Automobilen bekannt ist.

Gemäss einer Ausführungsform ist vorgesehen, dass ein Kommunikationsmodul bzw. eine Schnittstelleneinrichtung oder ein Adapter des Elektrofahrrads zur Abgabe und/oder zum Empfang von Informationen von externen Geräten in Form von Mobilgeräten, Datenspeichern und/oder medizinischen Vorrichtungen vorgesehen ist. Dazu können Daten über Kommunikationsmodul, Schnittstelleneinrichtung und/oder Adapter kabelgebunden und/oder kabellos zwischen dem Kommunikationssystem und Mobilgeräten, Datenspeichern und/oder medizinischen Vorrichtungen ausgetauscht werden. Im Falle von Mobilgeräten kann das Kommunikationssystem somit mit den Mobilgeräten bzw. auf den Mobilgeräten ausgeführten Anwendungsprogrammen bzw. Applikationen, sogenannten Apps, zusammenwirken, indem zum einen die Apps vom Kommunikationssystem gesteuert und mit Informationen versorgt werden und/oder zum anderen das Kommunikationssystem von den Apps gesteuert und mit Informationen versorgt wird.

Beispielsweise können Navigationsdaten vom Mobilgerät oder einem Datenspeicher an das Kommunikationssystem übertragen werden, damit dieses über die Signalvorrichtung entsprechende Navigationssignale ausgibt. Umgekehrt können die Apps mittels des Kommunikationssystems gesteuert werden, indem dieses Möglichkeiten zur Bedienung der Apps bereitstellt, wie beispielsweise Betätigungssignale und/oder Bestätigungssignale an die Apps zu senden, um gewisse Funktionen der Apps zu steuern sowie Parameter der Apps sowie das Mobilgerät einzustellen. So kann mittels des Kommunikationssystems die Lautstärke eines über das Mobilgerät, beispielsweise per Kopfhörer, an den Fahrer abgegebenen Audiosignals gesteuert werden. Das Audiosignal kann verändert, beispielsweise gedämpft oder verringert werden, wenn einer der oben genannten Näherungssensoren eine Annäherung eines Fahrzeuges oder eines anderen Objektes erkennt, um die Aufmerksamkeit des Fahrers auf seine Umgebung zu lenken.

Auch lassen sich Wiedergabefunktionen von Audio-Dateien steuern, die auf die Mobilgerät oder dem Datenspeicher gespeichert sind. Beispielsweise kann das Kommunikationssystem dazu ausgestaltet sein, die Wiedergabe anzuhalten, zu pausieren, zu stoppen oder einen anderen Titel in einer Wiedergabeliste auszuwählen. Auf ähnliche Art und Weise können mit dem Mobilgerät durchgeführte Kommunikationsvorgänge mit Hilfe des Komm unikationssystem s gesteuert werden, indem das Kommunikationssystem zum einen ein Signal an den Fahrer abgibt, wenn beispielsweise ein Anruf oder eine Nachricht eingeht. Zum anderen kann das Kommunikationssystem ermöglichen, einen Anruf oder eine Nachricht anzunehmen sowie dabei womöglich die Lautstärke einer Wiedergabe des Anrufs oder der Nachricht und/oder eine M ikrofonem pfindlichkeit während des Anrufs zu steuern.

Gleiches gilt für medizinische Vorrichtungen, wie mobile medizinische Vorrichtungen zur Erfassung und Überwachung physiologischer Parameter des Fahrers, wie beispielsweise tragbare EKG-Geräte, Insulinpumpen und dergleichen, die der Fahrer am Körper trägt. So kann das Kommunikationssystem dazu ausgebildet sein, Daten und insbesondere Meldungen von diesen medizinischen Vorrichtungen zu empfangen sowie Daten an die medizinischen Vorrichtungen zu senden, um beispielsweise von den medizinischen Vorrichtungen abgegebene Hinweis- oder Warnsignale mit Hilfe des Kommunikationssystems an den Fahrer zu übertragen oder die medizinischen Vorrichtungen zu bedienen.

Die Bedienelemente können in Form von Knöpfen, Tastern, Schaltern sowie Sensorleisten und/oder Sensorfeldern in bzw. an den Lenkergriffen und/oder im bzw. am Sattel angeordnet sein. Beispielsweise kann ein derartiges Bedienelement, insbesondere ein Sensorfeld, als Band entlang des Lenkergriffes und/oder um den Lenkergriff herum angeordnet sein, um Bediensignale als vom Fahrer ausgeübte Druck-, Zug- und/oder Drehbewegungen im Bereich des Lenkergriffes aufzunehmen, ohne dass der Fahrer seine Hände vom Lenkergriff lösen müsste, was dabei hilft, Sicherheitsrisiken beim Fahren des Elektrofahrrads weiter zu minimieren.

Auch können derartige Bedienelemente erkennen, ob der Fahrer die Lenkergriffe umgreift und in Abhängigkeit davon Steuerfunktionen ausüben. Beispielsweise kann eine elektrische Antriebsunterstützung durch den Elektroantrieb des Elektrofahrrads verringert werden, wenn das Kommunikationssystem erkennt, dass wenigstens einer der Lenkergriffe während der Fahrt nicht ordnungsgemäss umgriffen ist. Alternativ oder zusätzlich kann bei der Erkennung des nicht ordnungsgemässen Umgreifens der Lenkwiderstand erhöht werden, wie bereits oben erwähnt ist.

Mit den Bedienelementen kann eine Klimatisierungsvorrichtung zur Temperaturänderung bedient und gesteuert werden. Laut erfindungsgemässer Lösung wird im Bereich der Lenkergriffe die Funktion der Klimatisierungsvorrichtung in Abhängigkeit eines ordnungsgemässen Umgreifens gesteuert, indem eine Klimatisierungsfunktion der Klimatisierungsvorrichtung unterbunden wird, wenn wenigstens einer der Lenkergriffe nicht umgriffen ist. Darüber hinaus kann die Klimatisierungsvorrichtung durch Verwendung von mit dem Kommunikationssystem verbundenen Temperatursensoren gesteuert bzw. geregelt werden, die beispielsweise in den Lenkergriffen und/oder im Sattel angeordnet sind.

Eine Klimatisierungsvorrichtung für ein Elektrofahrrad umfasst eine elektronische Steuereinheit, wobei die Klimatisierungsvorrichtung ausgestaltet ist, signalübertragend mit der Steuereinheit verbunden zu sein.

Ein Elektrofahrrad weist eine Steuereinheit auf, die dazu ausgestaltet ist, mit einer Klimatisierungsvorrichtung zusammenzuwirken.

Die Klimatisierungsvorrichtung und das Elektrofahrrad ermöglichen in gegenseitiger Wechselwirkung miteinander Steuerung- und Regelungsfunktionen der Klimatisierungsvorrichtung sowie des Elektrofahrrads. Die Steuereinheit des Elektrofahrrads kann zur Steuerung, Regelung sowie Bedienung der Klimatisierungsvorrichtung ausgestaltet sein. Die Klimatisierungsvorrichtung ist im Wesentlichen unverlierbar mit dem Elektrofahrrad verbunden und möglichst exakt darauf abgestimmt bzw. darin integriert.

Somit lassen sich aus der Bedienung der Klimatisierungsvorrichtung resultierende Sicherheitsrisiken minimieren und der Fahrkomfort erhöhen. Mit Hilfe der Steuereinheit kann automatisch und/oder manuell eingestellt sowie parametrisiert werden, in welchem Umfang die Klimatisierungsvorrichtung zur Temperierung eingesetzt werden und/oder wie bzw. in welchem Ausmass die Klimatisierungsvorrichtung Energie beziehen bzw. zum Energiebezug berechtigt sein soll, indem sie beispielsweise in ihrer Priorisierung einem elektrischen Antrieb des Elektrofahrrads untergeordnet wird.

Gemäss einer weiteren Ausführungsform ist vorgesehen, dass die Klimatisierungsvorrichtung wenigstens ein Latentwärmespeicherelement beinhaltet. Ein Latentwärmespeicherelement kann dazu dienen, während des Ladevorgangs der Energiespeichervorrichtung des Elektrofahrrads, während dem des Elektrofahrrads und/oder die Energiespeichervorrichtung an eine Stromversorgung, die beispielsweise ein öffentliches Strom netz angeschlossen ist, Wärmeenergie aufzunehmen. Auch kann das Latentwärmespeicherelement Wärme aufnehmen, wenn das Elektrofahrrad in einem Rekuperationsmodus betrieben wird, während dem ein Elektroantrieb des Elektrofahrrads elektrischen Strom produziert, beispielsweise weil eine Fahrtgeschwindigkeit des Elektrofahrrads abgebremst wird und/oder das Elektrofahrrad bergab bewegt wird.

Die vom Latentwärmespeicherelement aufgenommene Wärmeenergie wird im Latentwärmespeicherelement einem Phasenübergang eines darin enthaltenen Speichermediums, beispielsweise als Schmelzenthalpie, gespeichert. Durch eine Auslösung eines Wärmeabgabeprozesses, beispielsweise eines Erstarrungsprozesses im Falle eines im wärmespeichernden Zustand geschmolzenen Speichermediums, wird eine der Schmelzenthalpie entsprechende Wärmemenge in Form von Erstarrungsenthalpie freigesetzt, ohne dass dafür eine Energiezufuhr bzw. -versorgung von aussen notwendig wäre, was insbesondere bei Elektrofahrrädern von Vorteil ist, weil deren Energiespeichervorrichtung bzw. Akkumulatorin der Regel eine begrenzte Speicherkapazität aufweist, die nicht unnötig durch Klimatisierungsprozesse der Klimatisierungsvorrichtung beansprucht werden sollte, da gespeicherte elektrische Energie möglichst vollständig für einen Antrieb des Elektrofahrrads zur Verfügung stehen sollte.

Gemäss erfindungsgemässer Lösung ist vorgesehen, dass die Klimatisierungsvorrichtung wenigstens ein Heizelement und ein Kühlelement zum Heizen bzw. Kühlen eines Griffes und/oder eines Sattels des Elektrofahrrads umfasst. Mit anderen Worten kann die Klimatisierungsvorrichtung sowohl eine Heizeinrichtung als auch eine Kühleinrichtung beinhalten. Zur Erzielung eines Kühldefekts kann wenigstens ein Peltierelement verwendet werden, das auch zum Heizen eingesetzt werden kann. Alternativ oder zusätzlich kann ein Widerstandsheizelement zum Heizen verwendet werden. Latentwärmespeicherelement, Kühlelement und/oder Heizelement lassen sich zu möglichst kompakten Einheiten zusammenfassen, die beispielsweise speziell zur Anordnung am Lenker, insbesondere im Bereich der Lenkergriffe oder in den Lenkergriffen, sowie im Sattel ausgestaltet sind. Zum Betrieb der Klimatisierungsvorrichtung können Energie- und/oder Signalversorgungsleitungen gezielt zu diesen Einheiten verlegt werden, vorzugsweise innerhalb des Rahmens, der Sattelstütze und/oder des Lenkers des Elektrofahrrads.

Gemäss einer weiteren Ausführungsform ist vorgesehen, dass die Klimatisierungsvorrichtung wenigstens ein Heizelement und/oder wenigstens ein Kühlelement zum Heizen bzw. Kühlen eines Lenkergriffes und/oder eines Sattels des Elektrofahrrads umfasst. Im Bereich des Lenkergriffes ist eine Beheizung von Vorteil, weil die Hände und besonders die Finger des Fahrers bei relativ niedrigen Aussentemperaturen durch den Fahrtwind überproportional stark abgekühlt werden. Wenigstens ein im Lenkergriff angebrachtes Heizelement hilft, dieser Abkühlung entgegenzuwirken. Ein im Sattel angeordnetes Heizelement kann ebenfalls helfen, den Sattel auf für den Fahrer angenehme Art und Weise zu heizen, insbesondere wenn der Sattel vor Beginn einer Fahrt mit dem Elektrofahrrad stark abgekühlt ist und/oder sehr niedrige Aussentemperaturen herrschen.

Zudem kann am Lenkergriff und insbesondere im Sattel ein Kühlelement eine angenehme Kühlwirkung für den Fahrer bereitstellen, wenn die Aussentemperaturen relativ hoch sind und/oder der Fahrer sehr hohen Anstrengungen ausgesetzt ist und sein Körper daher zu Überhitzung neigt. Um der Überhitzung entgegenzuwirken neigt der menschliche Körper im Regelfall zur Schweissproduktion, die bei körperlicher Belastung, beispielsweise beim Antreiben des Elektrofahrrads mit Muskelkraft, umso höher ausfällt.

Die Schweissproduktion kann als unangenehm em pfunden werden, besonders wenn der Schweiss die Kleidung des Fahrers durchnässt und er keine Möglichkeit zum Kleidungswechsel hat, was vom Fahrer als höchst unangenehm empfunden werden kann, wenn der Fahrer direkt nach der Fahrt mit dem Elektrofahrrad soziale Kontakte pflegt. Der Einsatz von Kühlelementen kann helfen, die Schweissproduktion zu senken und daher eine Durchnässung der Kleidung zu vermeiden.

Gemäss einer weiteren Ausführungsform ist vorgesehen, dass die Klimatisierungsvorrichtung wenigstens ein Heizelement für jeweils einen von zwei Lenkergriffen an einem Lenker des Elektrofahrrads umfasst, wobei die wenigstens zwei Heizelemente dazu ausgestaltet sind, die Lenkergriffe unabhängig voneinander und/oder unterschiedlich stark zu erwärmen. Mit anderen Worten können die Lenkergriffe unabhängig voneinander beheizt werden. Beispielsweise kann ein Betrieb der Heizelemente unterbrochen werden, wenn der Fahrer den jeweiligen Lenkergriff nicht oder nur schwach oder teilweise umgreift oder berührt, um Heizenergie zu sparen. Auf ähnliche Art und Weise können auch den Lenkergriffen zugewiesene Kühlelemente unabhängig voneinander betrieben werden. Ein unabhängiger Betrieb von Klimatisierungsvorrichtungen am Lenker und Sattel ist ebenfalls möglich.

Gemäss einer weiteren Ausführungsform ist vorgesehen, dass die Klimatisierungsvorrichtung dazu ausgebildet ist, die beiden Lenkergriffe unterschiedlich zu tem perieren und somit dem Fahrer eine geplante Richtungsänderung mitzuteilen. So kann eine geplante Richtungsänderung mitgeteilt werden, indem der in die geplante Richtung weisende Lenkergriff eine höhere Temperatur aufweist als der andere Lenkergriff. Eine Beheizung der Lenkergriffe zur Signalisierung einer Richtungsänderung kann insbesondere im Rekuperationsmodus erfolgen, wenn beispielsweise vor einer Richtungsänderung ein Bremsvorgang erfolgt, während dem Energie zur Signalisierung der Richtungsänderung gewonnen werden kann.

Dies ist insbesondere von Vorteil, wenn nicht sämtliche während der Rekuperation gewonnene Energie in der Energiespeichervorrichtung gespeichert werden kann, beispielsweise weil deren Speicherzustand zu hoch für eine Einspeicherung weiterer elektrischer Energie ist und/oder wenn ein während der Rekuperation gewonnener elektrischer Strom grösser ist als ein maximal möglicher oder zulässiger Ladestrom für die Energiespeichervorrichtung. Derartige Energiespeichervorgänge in Kombination mit Signalisierungsvorgängen können mit Hilfe der Steuereinheit automatisch geregelt, gesteuert und/oder vom Fahrer manuell eingestellt bzw. parametrisiert werden.

Gemäss einer weiteren Ausführungsform ist vorgesehen, dass die Steuereinheit ein Kommunikationsmodul zum Empfang von Navigationsinformationen umfasst. Die Navigationsinformationen können Abstandsinformationen und/oder Richtungsänderungsanweisungen beinhalten. Mit Hilfe der Abstandsinform ationen kann beispielsweise der Abstand des Elektrofahrrads und somit eine erwartete Fahrzeit bis zu einem geplanten Ziel oder Zwischenziel berechnet werden. Auf Basis dieser Berechnung kann wiederum ermittelt werden, inwiefern ein Füllzustand der Energiespeichervorrichtung zur Erreichung des Ziels bzw. Zwischenziels ausreicht bzw. beim Erreichen des Ziels bzw. Zwischenziels unter jeweiligen Fahrbedingungen bzw. einem der jeweiligen Fahrweise entsprechendem Energieverbrauch, ein Energieüberschuss oder -mangel vorherrschen würde.

Mit Hilfe des errechneten Energieüberschusses und/oder -mangels kann ein Energieverbrauch bzw. die Energieverteilung an Verbraucher innerhalb des Elektrofahrrads, wie beispielsweise der elektrische Antrieb und/oder die Klimatisierungsvorrichtung, durch die Steuereinheit geregelt werden. Wenn die Steuereinheit beispielsweise erkennt, dass bei vorherrschendem Energieverbrauch der Klimatisierungsvorrichtung eine in der Energiespeichervorrichtung verbleibende Energiemenge nicht dazu ausreicht, das Ziel bzw. Zwischenziels zu erreichen, kann die Steuereinheit ein entsprechendes Warnsignal an den Fahrer generieren und/oder eine Energieversorgung der Klimatisierungsvorrichtung einstellen oder zumindest drosseln.

Auch kann der Fahrer durch die Definition von Zwischenzielen den Energieverbrauch an gewisse Etappen seiner Fahrstrecke bzw. geplante Route und deren jeweilige Besonderheiten anpassen. So ist beispielsweise denkbar, dass der Fahrer entlang seiner geplanten Route einen Berg überqueren muss, wodurch zuerst ein genereller Anstieg bewältigt und dann nach einem maximalen Scheitelpunkt eine generelle Talfahrt durchgeführt werden muss. Somit ist es wünschenswert, wenn dem Fahrer möglichst bis zur Erreichung des maximalen Scheitelpunktes ausreichend Energiereserven in der Energiespeichervorrichtung zum zufriedenstellenden elektromotorischen Antrieb des Elektrofahrrads zur Verfügung stehen. Hingegen kann während der Talfahrt das Elektrofahrrad im Rekuperationsmodus betrieben werden, wodurch durch die Rekuperation gewonnene Energie in ausreichendem Masse zum Aufladen der Energiespeichervorrichtung und/oder zum Betrieb der Klimatisierungsvorrichtung zur Verfügung stehen kann.

Es ist also bei sämtlichen Ausführungsformen von Vorteil, wenn die Steuereinheit dazu ausgebildet ist, Höhenprofilinformationen zu verarbeiten und diese für ein Energiemanagement zu verwenden. Die Höhenprofilinformationen können der Steuereinheit insbesondere als Teil von Navigationsinformationen bereitgestellt werden. Anhand der Höhenprofilinformationen kann die Steuereinheit einen Energieverbrauch einzelner Komponenten des Elektrofahrrads bzw. des Antriebs und/oder der Klimatisierungsvorrichtung regeln oder zumindest diesbezügliche Informationen dem Fahrer durch entsprechende Signale und/oder Anzeigen bereitstellen.

Gemäss einer weiteren Ausführungsform ist vorgesehen, dass die Klimatisierungsvorrichtung ausgebildet ist, eine Klimatisierungswirkung im Bereich von Hauptblutgefässen eines Fahrers des Elektrofahrrads zu erzeugen. So stehen im Bereich der Hände des Fahrers beispielsweise die Arteria radialis und/oder Vena radialis sowie im Bereich des Beckens des Fahrers die Arteria femoralis und/oder Vena femoralis zur Verfügung, um insbesondere in entsprechenden an- und/oder umliegenden Hautregionen des Fahrers eine Klimatisierungswirkung zu erzeugen. Durch die Erzeugung der Klimatisierungswirkung nahe derartiger Hauptblutgefässe kann die Klimatisierungswirkung sich möglichst weitläufig im Körper des Fahrers bemerkbar machen, was insbesondere dabei hilft, eine generelle Unterkühlung oder Überhitzung des Fahrers zu vermeiden. Auch ist es im Umkehrschluss möglich, beispielsweise die Temperatur zumindest eines der Lenkergriffe so zu erhöhen, dass ein Fahren mit dem Elektrofahrrad erheblich beeinträchtigt wird, wenn die Steuereinheit ein Signal, dass eine unberechtigte Nutzung des Elektrofahrrads signalisiert, generiert und/oder erhält.

Gemäss einer weiteren Ausführungsform ist vorgesehen, dass die Klimatisierungsvorrichtung wenigstens ein thermisches Sensorelement bzw. ein Temperatursensor zum Messen einer Temperatur umfasst. Bei der zu messenden Temperatur kann es sich beispielsweise um eine Umgebungstemperatur, eine Temperatur von Komponenten des Elektrofahrrads und/oder um eine Temperatur des Fahrers handeln. Auf Basis der jeweils gemessenen Temperatur kann eine Klimatisierungsfunktion der Klimatisierungsvorrichtung durch die Steuereinheit geregelt werden.

Gemäss einer weiteren Ausführungsform ist vorgesehen, dass ein Elektrofahrrad mit einer Antriebsenergie für das Elektrofahrrad bereitstellenden Energiespeichervorrichtung ausrüstbar ist, wobei die Klimatisierungsvorrichtung betriebsenergieempfangend mit Energiespeichervorrichtung verbunden ist. Derartige Energiespeichervorrichtungen weisen in der Regel eine relativ hohe Energiespeicherkapazität auf. Somit sollte ausreichend Energie zum Betrieb der Klimatisierungsvorrichtung über einen gewissen Zeitraum bereitgestellt werden können, um dem Fahrer ein möglichst komfortables Fahrerlebnis zu ermöglichen.

Gemäss einer weiteren Ausführungsform ist vorgesehen, dass das Elektrofahrrad ausgebildet ist, die Klimatisierungsvorrichtung mittels in einem Rekuperationsmodus des Elektrofahrrads gewonnener elektrischer Energie zu versorgen. Wie bereits oben erwähnt, kann es insbesondere von Vorteil sein, die Klimatisierungsvorrichtung während des Rekuperationsmodus zu betreiben und/oder derart mit Energie zu versorgen, dass in oder mit der Klimatisierungsvorrichtung eine Speicherwirkung erzielt wird. Diese Speicherwirkung kann beispielsweise daraus bestehen, dass mit der Klimatisierungsvorrichtung temperierte Komponenten und Elemente des Elektrofahrradssozusagen vorgeheizt und/oder vorgekühlt werden, damit eine gewisse Heiz- bzw. Kühlleistung zur Verfügung steht, welche die Energiespeichervorrichtung nicht belastet. Zum einen kann zur Erzielung der Speicherwirkung eine Temperatur eingestellt werden, die zumindest kurzfristig über- bzw. unterhalb eines gewünschten Temperaturniveaus liegt. Andererseits kann zur Erzielung der Speicherwirkung Wärmeenergie in einem Latentwärmespeicher gespeichert oder aus diesem entnommen werden.

Gemäss einer weiteren Ausführungsform ist vorgesehen, dass die Steuereinheit ausgebildet ist, die Klimatisierungsvorrichtung zu einem definierten Zeitpunkt in Betrieb oder ausser Betrieb zu setzen. Definierte Zeitpunkte können vom Fahrer vorgegeben werden, um die Klimatisierungsvorrichtung ab einem gewissen Zeitpunkt vor geplantem Antritt einer Fahrt mit dem Elektrofahrrad oder bis zu einem geplanten Zeitpunkt nach einer Fahrt mit dem Elektrofahrrad zu betreiben. So kann beispielsweise vor Beginn der Fahrt die Klimatisierungsvorrichtung durch Heizen ein gewünschtes Temperaturniveau einstellen, wenn das Elektrofahrrad beispielsweise bei relativ niedrigen Aussentemperaturen im Aussenbereich bzw. in unbeheizten Räumlichkeiten oder Umgebungen abgestellt ist. Der Fahrer kann dann auf ein gewissermassen vorgeheiztes Elektrofahrrad zurückgreifen. Im Umkehrschluss kann das Elektrofahrrad vorgekühlt werden, wenn es bei relativ hoher Umgebungstemperatur abgestellt und/oder Sonneneinstrahlung ausgesetzt ist. Ein Vorheizen und/oder Vorkühlen kann insbesondere dann auf vorteilhafte Art und Weise durchgeführt werden, wenn das Elektrofahrrad vor der Fahrt, beispielsweise zum Laden der Energiespeichervorrichtung, an ein elektrisches Versorgungsnetz und/oder an eine zusätzliche Versorgungsbatterie angeschlossen ist.

Gemäss einer weiteren Ausführungsform ist vorgesehen, dass die Steuereinheit dazu ausgebildet ist, ein Annäherungssignal, das die Annäherung des Fahrers an das Elektrofahrrad repräsentiert, zu empfangen, wobei die Steuereinheit ferner dazu ausgebildet ist, die Klimatisierungsvorrichtung nach Empfang des Annäherungssignals in Betrieb zu setzen. Das Annäherungssignal kann unter Verwendung eines elektronischen Sicherungsschlüssels und/oder einer elektronischen Fahrzeugkennung für das Elektrofahrrad ausgelöst werden bzw. diese beinhalten.

Der elektronischen Sicherungsschlüssel und/oder die elektronische Fahrzeugkennung können in einem entsprechenden elektronischen Zugangsmittel, wie einem elektronischen Schlüssel, einem Badge, einer Speicherkarte oder ähnlichem abgelegt und/oder in einem Mobilgerät, wie beispielsweise einem Mobiltelefon verwaltet und/oder gespeichert sein. Die Steuereinheit kann dazu ausgebildet sein, eine Annäherung des Zugangs mittels zu erkennen. Alternativ oder zusätzlich kann vom Mobilgerät aus ein Annäherungssignal versendet werden. Als weitere Alternative oder zusätzliche Möglichkeit kann ein taktiler Sensor eine Annäherung in Form eines physikalischen Kontaktes des Fahrers mit dem Elektrofahrrad erkennen, beispielsweise wenn dieser die Lenkergriffe umgreift, sich auf den Sattel setzt, und/oder die Füsse auf die Pedale setzt bzw. an seinen Schuhen ausgebildete Formschlusselemente in Eingriff mit komplementären Gegenformschlusselementen der Pedale bringt.

Gemäss einer weiteren Ausführungsform ist vorgesehen, dass die Steuereinheit dazu ausgebildet ist, Wetterinformationen zur Steuerung der Klimatisierungsvorrichtung zu empfangen. Mit Hilfe der Wetterinformationen kann die Klimatisierungsvorrichtung vorausschauend und/oder den jeweiligen Wetterbedingungen entsprechend betrieben werden. Auch kann mit Hilfe der Wetterinformationen ein zu erwartender Energieverbrauch kalkuliert werden.

Gemäss einer weiteren Ausführungsform ist vorgesehen, dass die Steuereinheit dazu ausgebildet ist, Signale zur Steuerung der Klimatisierungsvorrichtung von einem externen Gerät zu empfangen. Zum kabellosen und/oder kabelgebundenen Empfang und/oder zur Aussendung von Signalen ist die Steuereinheit mit einem Kommunikationsmodul versehen. Beim externen Gerät kann es sich beispielsweise um eine Verwaltungseinrichtung zur Verwaltung der Funktionen des Elektrofahrrads, wie beispielsweise einen Computer o. ä. handeln. Auch kann das externe Gerät als Mobilgerät, Datenspeicher und/oder medizinische Vorrichtung ausgebildet sein. Somit kann die Klimatisierungsvorrichtung den jeweiligen Anforderungen entsprechend mit Hilfe des externen Geräts eingestellt, gesteuert und/oder parametrisiert werden, was eine Verwendung sämtlicher hierin genannter Signale, Parameter sowie physikalischer Grössen umfasst.

### Figurenbeschrieb

Anhand der beiliegenden Figuren werden Ausführungsbeispiele zur Erfindung beschrieben. Die Figuren zeigen lediglich Ausführungsbeispiele, wobei Merkmale, wie oben beschrieben, entsprechend jeweiliger Anforderungen beliebig miteinander kombiniert oder auch weggelassen werden können.

Es zeigen:
- Fig. 1: eine schematische Seitenansicht eines Elektrofahrrads;
- Fig. 2: eine schematische Perspektivansicht eines Elektrofahrrads;
- Fig. 3: ein Detail III aus Fig. 2;
- Fig. 4: eine schematische Querschnittsansicht eines Lenkers eines Elektrofahrrads;
- Fig. 5: ein Detail V aus Fig. 2;
- Fig. 6: eine schematische Diagrammdarstellung eines Kommunikationssystems für ein Elektrofahrrad; und
- Fig.7: eine schematische Diagrammdarstellung einer Kommunikationsanordnung mit einem Elektrofahrrad.

### Ausführung der Erfindung

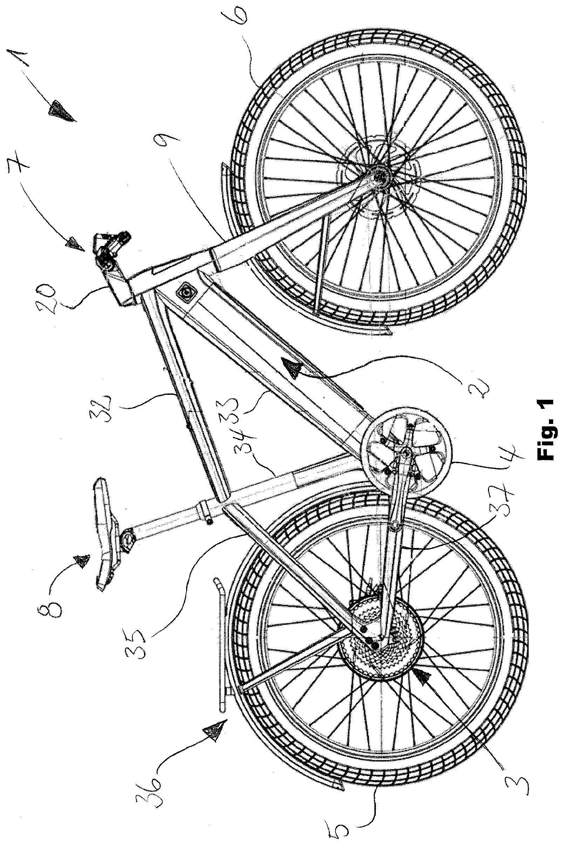

Figur 1 zeigt ein Fahrrad in Form eines Elektrofahrrads 1 mit einer Energiespeichervorrichtung 2 in einer schematischen Seitenansicht. Das Elektrofahrrad 1 besitzt neben einem Elektroantrieb 3 einen Pedalantrieb 4, um ein als Antriebsrad verwendetes Hinterrad 5 anzutreiben. Des Weiteren besitzt das Elektrofahrrad 1 ein Vorderrad 6, einen Lenker 7 und einen Sattel 8 für einen Fahrer bzw. Benutzer (nicht gezeigt). Das Vorderrad 6 ist an einer Gabel 9 des Elektrofahrrad 1 aufgenommen.

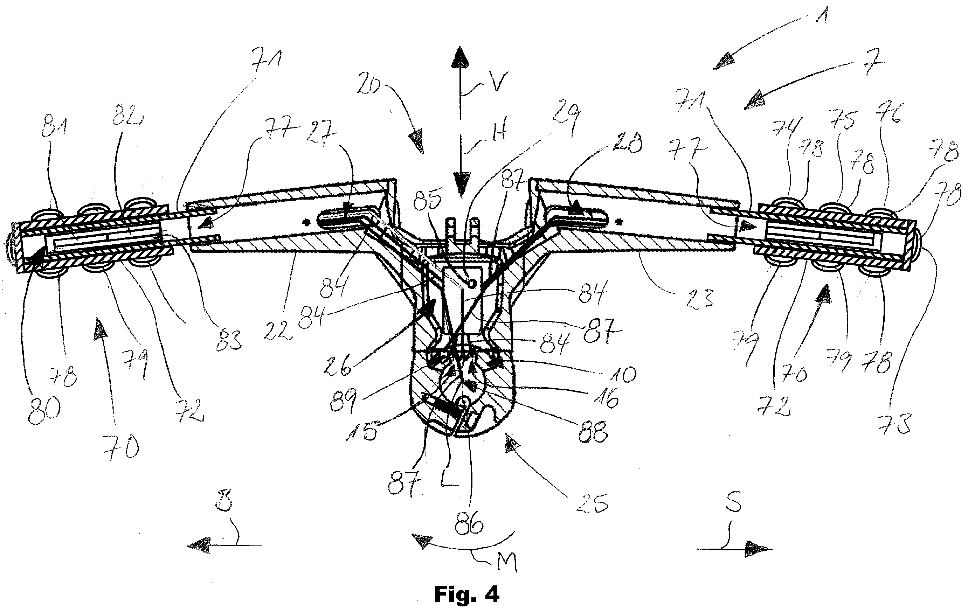

Ein hohlzylindrisches Bauteil 10 in Form einer Art Buchsenkörper stellt einen inneren Hohlraum 11 und Leitungsaufnahmen 15, 16 in einem Vorbau 20 des Elektrofahrrads 1 bereit, der mit Lenkerstutzen 22, 23, einer Schaftaufnahme 25, einem Hohlraum 26, Leitungsführungen 27, 28 und mit einem elektronischen Bauteil 29 versehen ist (s. Fig. 4). Der Vorbau 20 verbindet den Lenker 7 mit einem Fahrradrahmen bzw. Rahmen 31 des Elektrofahrrads 1. Der Rahmen 31 trägt die Energiespeichervorrichtung 2, den Elektroantrieb 3, den Pedalantrieb 4, das Hinterrad 5, den Lenker 7, den Sattel 8 sowie die Gabel 9 und umfasst ein Oberrohr 32, ein Unterrohr 33, ein Sattelrohr 34 und ein oberes Rohr 35, das einen Hinterbau 36 zusammen mit einem unteren Rohr 37 bildet. Besonders vorteilhafte Ausführungsformen des hohlzylindrischen Bauteils 10 und dessen Zusammenwirken mit dem Vorbau 20 und weiteren Elementen und Komponenten des Elektrofahrrads 1 sind in einer Patentanmeldung der Anmelderin mit dem Titel «HOHLZYLINDRISCHES BAUTEIL SOWIE VORBAU FÜR EIN FAHRRAD UND FAHRRAD» offenbart, die am gleichen Tage wie die vorliegende Offenbarung angemeldet worden ist .

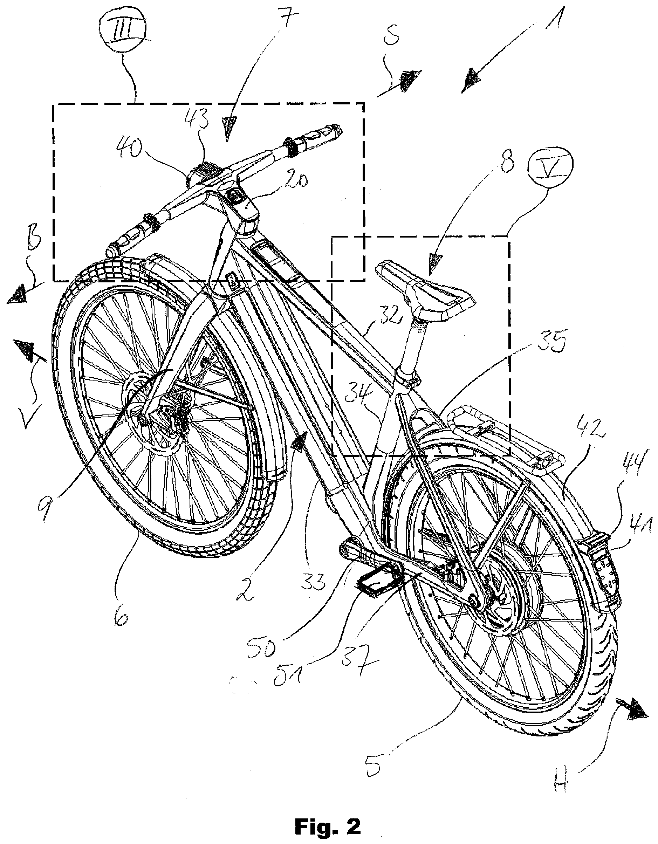

Fig. 2 zeigt eine schematische Perspektivansicht des Elektrofahrrads 1. Das Elektrofahrrad 1 wird in der Regel in einer Fahrtrichtung V, sprich vorwärts, angetrieben, die einer Rückrichtung H, sprich rückwärts, entgegengesetzt ist. Mit Hilfe des Lenkers 7 sowie Gewichtsverlagerung des Fahrers kann das Elektrofahrrad 1 nach Backbord B, sprich in Fahrtrichtung V betrachtet nach links, sowie nach Steuerbord S, sprich in Fahrtrichtung V nach rechts betrachtet, gesteuert werden. Am Lenker 7 ist eine in Fahrtrichtung V weisende Vorderlampe 40 angebracht. Im Bereich des Hinterbaus 36 ist ein in Rückrichtung H weisendes Rücklicht 41 angebracht, hier beispielsweise an einem das Hinterrad 5 zumindest teilweise umgebenden Schutzblech 42.

Das Elektrofahrrad 1 besitzt einen vorderen Näherungssensor 43, der in Fahrtrichtung V gerichtet ist und beispielsweise an der Vorderlampe 40 angeordnet sein kann. Ein hinterer Näherungssensor 44 ist in Rückrichtung H ausgerichtet und kann beispielsweise am Rücklicht 41 angebracht sein. Die Näherungssensoren 43, 44 sind dazu ausgestaltet, eine Annäherung des Elektrofahrrads 1 an sich in Fahrtrichtung V bzw. in Rückrichtung H befindliches Objekte zu erfassen. Die Näherungssensoren 43, 44 können beispielsweise auf Basis von Ultraschallsensoren und/oder Radarsensoren den Abstand zwischen dem Elektrofahrrad 1 und dem Objekt erfassen.

Des Weiteren ist in Fig. 2 eine von zwei Kurbeln 50 des Elektrofahrrads 1 ersichtlich, die zum Antreiben des Elektrofahrrads 1 mittels Muskelkraft des Fahrers dient und dazu eine Pedale 51 aufweist. Die Pedale 51 kann den jeweiligen Anforderungen gemäss ausgestaltet sein, damit der Fahrer entweder mit seinen Füssen bzw. an diesen befindlichen Schuhen einfach auf der Pedale 51 aufliegt oder durch einen zwischen Schuh und Pedale 51 erzeugten Formschluss mit der Pedale 51 verbunden ist.

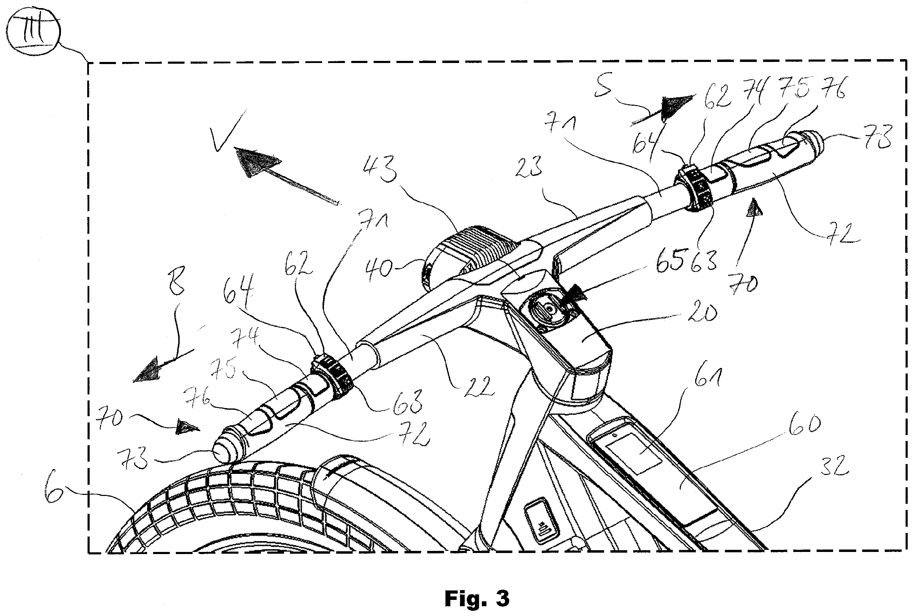

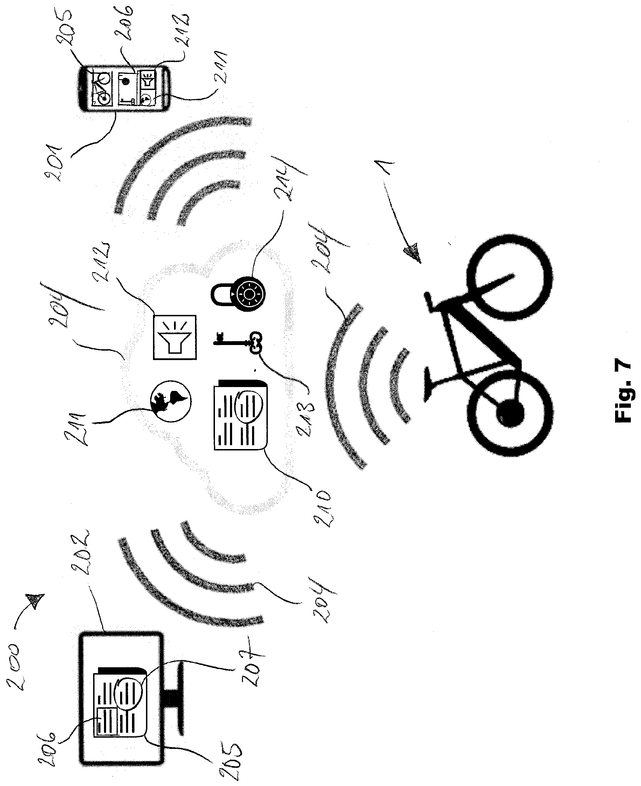

Fig. 3 zeigt ein Detail III aus Fig. 2. Das Elektrofahrrad 1 ist mit einer elektronischen Steuereinheit 60 versehen. Im vorliegenden Ausführungsbeispiel ist die Steuereinheit 60 des Elektrofahrrads 1 in das Oberrohr 32 integriert. Eine elektronische Anzeigeeinrichtung 61 der Steuereinheit 60, im vorliegenden Fall in Form eines Displays, wie beispielsweise ein LCD-Display, ist in ein Gehäuse der Steuereinheit 60 integriert, die im Wesentlichen bündig mit einer Oberfläche des Oberrohr 32 fluchtend in das Oberrohr 32 eingesetzt ist. Eine Bedienung der Steuereinheit 60 ist über Bedieneinheiten 62 ermöglicht, die dazu jeweils wenigstens einen, vorliegend eine Vielzahl von Bedienknöpfen 63 aufweisen. An den Bedieneinheiten 62 angeordnete Leuchtelemente 64 ermöglichen eine Abgabe von Lichtsignalen. Ein Adapter 65 des Elektrofahrrads 1 ist dazu ausgestaltet, ein Gerät (s. Fig. 7), beispielsweise ein Mobiltelefon, eine mobile medizinische Vorrichtung, ein Datenspeicher o. ä. am Elektrofahrrad 1 zu befestigen sowie die Steuereinheit 60 und/oder die Energiespeichervorrichtung 2 daten- und/oder energieübertragend mit dem Mobilgerät zu verbinden.

Die Bedieneinheiten 62 sind so am Lenker 7 angeordnet befestigt, dass der Fahrer die Bedienknöpfe 63 mit seinen Daumen bedienen kann, wenn er mit seinen Händen am Lenker 7 angebrachte Lenkergriffe 70 des Elektrofahrrads 1 umgreift. Die Lenkergriffe 70 sind jeweils in einem Lenkerrohr 71 aufgenommen, das im Vorbau 20 gehalten ist. Jedes der beiden Lenkerrohre 71 ist jeweils in einem der Lenkerstutzen 22, 23 des Vorbaus 20 aufgenommen. Alternativ kann ein einziges durchgehendes Lenkerrohr 71 anstatt der beiden Lenkerrohre 71 verwendet werden, um die beiden Lenkergriffe 70 daran zu befestigen. An den Lenkergriffen 73 sind jeweils ein Auflagebereich 72, ein Griffendbereich 73 sowie Fingerbereiche 74, 75, 76 in Form eines inneren Fingerbereichs 74, eines mittleren Fingerbereichs 75 und eines äusseren Fingerbereichs 76 ausgeformt.

Der Auflagebereich 72 ist zur Auflage der Hand, insbesondere der Handballen des Fahrers, ausgestaltet und angeordnet. Der Griffendbereich 73 steht im Regelfall von den Lenkergriffen 70 derart in Backbordrichtung B bzw. Steuerbordrichtung S vor, dass er sich bei von der Hand des Fahrers umgriffenen Lenkergriffen 70 über die Handkante hinaus in Backbord Richtung B bzw. Steuerbordrichtung S weg erstreckt und dadurch im Regelfall ein seitliches äusseres Ende des Elektrofahrrads 1 samt Fahrer bildet. Die Fingerbereiche 74, 75, 76 sind zur Auflage der Finger des Fahrers ausgestaltet. So ist auf den inneren Fingerbereichs 74 ein Zeigefinger aufzulegen, auf den mittleren Fingerbereichs 75 Mittel- und/oder Ringfinger aufzulegen und auf der äusseren Fingerbereichs 76 Ringfinger- und/oder kleiner Finger aufzulegen.

Fig. 4 zeigt eine schematische Querschnittsansicht des Lenkers 7 des Elektrofahrrads 1. Im Lenker 7 ist innerhalb der Lenkerstutzen 22, 23 ein Freiraum 77 gebildet, der sich bis in die Lenkerrohre 71 fortsetzt. Distale Endbereiche der Lenkerrohre 71 sind von den Lenkergriffen 71 eng umschlossen, deren Griffendbereich 73 die Freiräume 77 abdichtend verschliesst. Im Auflagebereich 72, Griffendbereich 73 sowie in den Fingerbereichen 74, 75, 76 ist jeweils mindestens ein taktiles Sensorelement 78 angeordnet, das von einer in den Fingerbereichen 74, 75, 76 den Lenkergriff 70 bildenden elastischen Schicht, wie beispielsweise einer hautartigen Schicht aus Gummi und/oder Kunststoff, hermetisch gegenüber der äusseren Umgebung des Elektrofahrrads 1 abgedichtet aufgenommen ist. Das taktile Sensorelement 78 umfasst wenigstens ein weg-, kraft-, druck, impuls- und/oder richtungsempfindliches elektrisches bzw. elektronisches Bauelement, wie beispielsweise ein (piezzo-)resistives, induktives, kapazitives und/oder optisches Bau- bzw. Schaltelement.

Über die Sensorelemente 78 kann der Fahrer Steuerungssignale auslösen. Insbesondere die in den Fingerbereichen 74, 75, 76 angeordneten Sensorelemente 78 kann der Fahrer mit Zeigefinger, Mittelfinger, Ringfinger und/oder kleinem Finger gezielt betätigen, um entsprechende Steuersignale auszulösen. Im Griffendbereich 73 angeordnete Sensorelemente 78 können einerseits für Eingaben durch den Fahrer dienen. Zum anderen lässt sich mit Hilfe dieser Sensorelemente 78 in den Griffendbereichen 73 erkennen, ob der Griffendbereich 73 Kontakt zu einem anderen Objekt hat. Wenn das Elektrofahrrad 1 beispielsweise steht, d.h. es nicht bewegt wird, und durch das Sensorelement 78 ein Kontakt des Griffendbereichs 73 mit einem Objekt erkannt wird, so kann dies darauf hindeuten, dass das Elektrofahrrad 1 an ein Objekt angelehnt, sozusagen geparkt ist. Mit Hilfe von im Auflagebereich 72 angeordneten Sensorelementen 78 und/oder in den Fingerbereichen 74, 75, 76 angeordneten Sensorelementen 78 kann zudem erkannt werden, ob der Lenkergriffe 70 ordnungsgemäss vom Fahrer umgriffen ist.

Die Lenkergriffe 70 beinhalten jeweils wenigstens ein Schwingungselement 79. Die Schwingungselemente 79 sind vorteilhafterweise ähnlich wie die Sensorelemente 78 von einer den Lenkergriff 70 zumindest abschnittsweise bildenden elastischen Schicht, wie beispielsweise einer hautartigen Schicht aus Gum m i und/oder Kunststoff hermetisch gegenüber der äusseren Umgebung des Elektrofahrrads 1 abgedichtet im Lenkergriff 70 aufgenommen. Im vorliegenden Ausführungsbeispiel sind jeweils 2 Schwingungselemente 79 den Auflagebereichen 72 der Lenkergriffe 70 angeordnet. Die Schwingungselemente 79 umfassen Schwingungsgeber, die zur Abgabe von Vibrationen ausgestaltet sind und dazu Elektromotoren mit einer Unwucht und/oder andersartige magnetische Antriebe, wie Schwingspulen und/oder kapazitive Elemente beinhalten, die beispielsweise mit Membranen zusammenwirken, um elektromagnetisch erzeugte Schwingungen abzugeben. Eine Anordnung der Schwingungselemente 79 in den Auflagebereichen 72, in denen im Regelfall der Handballen eines den Lenkergriff 70 umgreifenden Fahrers sein Körpergewicht zumindest teilweise abstützend aufliegt hat den Vorteil, dass durch den sich daraus ergebenden innigen Kontakt zwischen Handballen und Lenkergriff 70 Schwingungen möglichst effektiv auf den Fahrer übertragen werden können.

Des Weiteren ist im Freiraum 77 des Lenkers 7 im Bereich der Lenkergriffe 70 jeweils eine Klimatisierungsvorrichtung 80 des Elektrofahrrads 1 angeordnet. Durch die Aufnahme der Klimatisierungsvorrichtung 80 im von den Lenkergriffen 70 hermetisch abgeschlossenen Freiraum 77 sind die Klimatisierungsvorrichtungen 80 vor schädlichen Umwelteinflüssen geschützt. Die Klimatisierungsvorrichtung 80 umfasst wenigstens ein Kühlelement 81, wenigstens ein Heizelement 82 und/oder wenigstens ein Latentwärmespeicherelement 83. Mithilfe des Kühlelements 81 lässt sich der Lenkergriff 70, vorzugsweise im Auflagebereich 72 kühlen, um bei relativ hoher körperlicher Beanspruchung des Fahrers und/oder relativ hohen Aussentemperaturen für eine als angenehm empfundene Abkühlung des Fahrers zu sorgen. Beispielsweise kann das Kühlelement 81 ein Peltier-Element umfassen. Das Heizelement 81 kann ebenfalls das Peltier-Element und/oder einen elektrischen Heizwiderstand umfassen.

Eine Anordnung der Klimatisierungsvorrichtung 80 im Bereich des Auflagebereichs 72 kann insbesondere so ausgelegt sein, dass wenigstens ein Kühlelement 81 möglichst nahe an Hauptblutgefässen der Hand angeordnet sind, wie beispielsweise der Arteria radialis und/oder Vena radialis, um gezielt eine vom Fahrer spürbare und ihn angenehm abkühlende Klimatisierungswirkung zu erzielen, die sich durch eine Wärmeübertragung in die Hauptblutgefässe im ganzen Körper des Fahrers bemerkbar machen kann. Ähnliches gilt für das wenigstens eine Heizelement 82 in jedem der Lenkergriffe 70, wobei es bei den Heizelementen 82 weiterhin insbesondere von Vorteil sein kann, wenn diese die Lenkergriffe 70 in den Fingerbereichen 74, 75, 76 heizen. Bei relativ niedrigen Aussentemperaturen kühlen sich nämlich erfahrungsgemäss insbesondere die Finger des Fahrers aufgrund des entgegen der Fahrtrichtung V auf die Finger treffenden Fahrtwindes auf unangenehme Art und Weise ab. Somit kann bei relativ kalten Aussentemperaturen eine Beheizung der Fingerbereiche 74, 75, 76 zu einer für den Fahrer sehr angenehm en Klimatisierung der Lenkergriffe 70 beitragen.

Das wenigstens eine Latentwärmespeicherelement 83 der Klimatisierungsvorrichtung 80 ist dazu ausgestaltet, thermische Energie möglichst verlustarm für möglichst viele Wiederholzyklen und über eine möglichst lange Zeit zu speichern. Das Latentwärmespeicherelement 83 enthält dazu vorzugsweise ein Phasenwechselmaterial zur Abgabe und Aufnahme von Schmelzwärme, Lösungswärme und/oder Absorptionswärme, wie beispielsweise paraffinhaltige Substanzen und/oder Salze als Speichermedium. In der Regel wird das Speichermedium bei seiner jeweiligen Schmelztemperatur aufgeschmolzen, beispielsweise mit Hilfe des Heizelements 82. Eine Entladung des Latentwärmespeicherelements 83 zur Abgabe von thermischer Energie zum Heizen des Lenkergriffes 70 geschieht durch erstarren des Speichermediums, indem dieses Erstarrungswärme abgibt. Die Erstarrung kann beispielsweise durch Kristallisation geschehen, die mit Hilfe eines mechanisch und/oder elektromagnetisch erzeugten Impulses ausgelöst werden kann, der bei einer entsprechenden automatischen oder manuellen Auslösung in der Klimatisierungsvorrichtung 80 abgegeben wird.

Die Lenkergriffe 70 können durch die jeweilige Klimatisierungsvorrichtung in 80 vorteilhafterweise vortemperiertwerden, wenn bei einem abgestellten, d. h. nicht in Benutzung befindlichen Elektrofahrrad 1, eine Temperatur der Lenkergriffe 70 bei relativ niedrigen Aussentemperaturen als unangenehm empfunden weit unterhalb der Körpertemperatur des Fahrers oder bei relativ hohen Aussentemperaturen bzw. direkt auf die Lenkergriffe 70 einwirkender Sonneneinstrahlung als unangenehm empfunden weit oberhalb der Körpertem peratur des Fahrers liegt.

Die an den Lenkergriffen 70 angeordneten Sensorelemente 78, Schwingungselemente 79 und Klimatisierungsvorrichtungen 80 sowie die Vorderlampe 40, der Näherungssensor 43 und die Bedieneinheiten 62 sind über Energie- und/oder Signalübertragungsleitungen 84 entweder direkt oder über das im Hohlraum 26 des Vorbaus 20 aufgenommenen elektronische Bauteil 29 mit der Energiespeichervorrichtung 2 und/oder mit der Steuereinheit 60 des Elektrofahrrads 1 energie- und/oder signalübertragend verbunden. Die Energie- und/oder Signalübertragungsleitungen 84 sind durch die Leitungsführungen 27, 28 im Vorbau 20 in den Hohlraum 26 geführt und können entweder innerhalb des Lenkers 7 im Freiraum 77 zu den Sensorelementen 78, Schwingungselementen 79, der Klimatisierungsvorrichtung 80, der Vorderlampe 40 und/oder den Bedieneinheiten 62 geführt sein oder dazu durch wenigstens eine im Bereich der Lenkerstutzen 22, 23 und/oder an einer in Fahrtrichtung V weisenden Stirnseite im Vorbau 20 ausgeformte Austrittsöffnung (nicht gezeigt) nach aussen geführt sein, von wo aus sie alternativ oder zusätzlich an die Sensorelemente 78, Schwingungselemente 79 und Klimatisierungsvorrichtungen 80, die Vorderlampe 40, den Näherungssensor 43 und/oder die Bedieneinheiten 62 angeschlossen sind. In der wenigstens einen Austrittsöffnung können die Energie- und/oder Signalübertragungsleitungen 84 von Leitungsdichtungselementen (nicht gezeigt) abdichtend umschlossen sein, die ihrerseits zumindest aussenumfangsseitig abdichtend in den Austrittsöffnungen aufgenommen sind, um diese möglichst hermetisch abdichtend zu verschliessen.

Vom Hohlraum 26 aus sind die Energie- und/oder Signalübertragungsleitungen 84 entweder direkt zur Energiespeichervorrichtung 2 und/oder zur Steuereinheit 60 geführt oder zunächst mit dem elektronischen Bauteil 29 verbunden, das wenigstens eine gedruckte Leiterplatte beinhalten kann. Das elektronische Bauteil 29 dient dazu, elektrische bzw. elektronische Signale sowie Energie zu bündeln sowie zu verteilen, umzusetzen und/oder zu konditionieren. So kann beispielsweise als ein bekanntes Standardsystem zur Energie und/oder Datenübertragung zwischen dem elektronischen Bauteil 29 und der Steuereinheit 60 der sogenannte «EnergyBus» oder ein ähnliches standardisiertes System zur elektrischen Verbindung der Komponenten des Elektrofahrrads 1 verwendet werden. Vom elektronischen Bauteil 29 aus lassen sich die Sensorelemente 78, Schwingungselemente 79, Klimatisierungsvorrichtungen 80, die Vorderlampe 40, der Näherungssensor 43 und/oder die Bedieneinheiten 62 somit zentral elektronisch ansteuern, abfragen und/oder mit elektrischer Energie versorgen bzw. elektrische Energie empfangen, was dabei hilft, die Anzahl bzw. den Umfang von Energie- und oder Datenübertragungsleitungen 84 zu minimieren, die vom Vorbau 20 aus in den Rahmen zu führen sind.

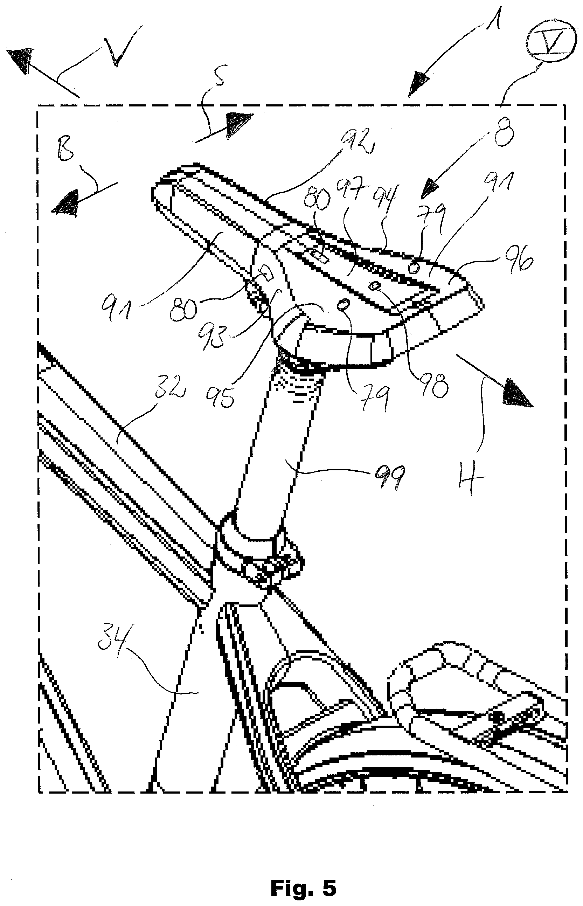

Weitere ein- und/oder Ausgabeelemente, beispielsweise in Form von Sensorelementen 78, 79 (s. Fig. 5) Schwingungselementen 79, Klimatisierungsvorrichtung 80 und/oder Bedieneinheiten 62 sowie zusätzlich wenigstens ein Schallerzeugungselement 85 lassen sich am oder auf dem elektronischen Bauteil 29 anordnen. Das wenigstens eine Schallerzeugungselement 85 kann alternativ oder zusätzlich an einem beliebigen anderen Ort am und/oder im Elektrofahrrad 1 angebracht und durch Energie- und/oder Signalübertragungsleitungen entweder direkt oder beispielsweise über das elektronische Bauteil 29 mit der Energiespeichervorrichtung 2 und/oder der Steuereinheit 60 verbunden sein. Mit dem Schallerzeugungselement 85, dass beispielsweise als Lautsprecher oder einfacher Tonerzeuger ausgestaltet sein kann, lassen sich akustische Signale erzeugen und somit dem Fahrer bereitstellen. Alternativ oder zusätzlich können akustische Signale als Warn- und/oder Hinweissignale, wie beispielsweise Hup- und/oder Klingelsignale erzeugen, die mit Hilfe des elektronischen Bauteils 29 und/oder der Steuereinheit 60 automatisch und/oder durch Bedienung der Sensorelemente 78 und/oder Bedieneinheiten 62 manuell ausgelöst werden.

Aus dem Hohlraum 26 im Vorbau 20 sind die Energie- und/oder Signalübertragungsleitungen 84 zur Steuereinheit 60 und/oder zum Adapter 65 geführt. Da der Adapter 65 direkt auf der Oberseite des Vorbaus 20 angeordnet ist, kann der Adapter 65 unmittelbar über dem Hohlraum 26 angeordnet und daher auf einfachem Wege mit aus dem Hohlraum 26 zu ihm geführten Energie- und/oder Signalübertragungsleitungen 84 verbunden sein. Aus dem Hohlraum 26 zur Steuereinheit 60 hin führende Energie- und/oder Signalübertragungsleitungen 84 sind über die Schaftaufnahme 25 des Vorbaus 20 in den Rahmen 31 geführt. Die Schaftaufnahme 25 dient der Aufnahme eines verdrehsicher mit dem Vorbau 20 zu verbindenden Gabelschaftes (nicht gezeigt) der Gabel 9.

Um im Bereich der Schaftaufnahme 25 genügend Freiraum bzw. Spielraum zur Durchführung der Energie- und/oder Signalübertragungsleitungen 84 aus dem Vorbau 20 in den Rahmen 31 bereitzustellen ist wenigstens eine der Leitungsaufnahmen 15, 16 vorgesehen, die sich entlang der Schaftaufnahme25 erstreckt. Das hohlzylindrische Bauteil 10 ist im Bereich der Schaftaufnahme 25 im Vorbau 20 aufgenommen. Die wenigstens eine Leitungsaufnahme 15, 16 ist am hohlzylindrischen Bauteil 10 ausgeformt. Der zumindest abschnittsweise vom hohlzylindrischen Bauteil 10 gebildete innere Hohlraum 11 ist dazu ausgestaltet, den Gabelschaft zumindest abschnittsweise zu umschliessen, wobei die wenigstens eine sich zum Hohlraum 11 hin öffnende Leitungsaufnahme 15, 16 ermöglicht, jeweils wenigstens eine Energie- und/oder Signalübertragungsleitung 84 entlang des Gabelschaftes vom Vorbau 20 in den Rahmen 31 zu führen.

Im Bereich der Schaftaufnahme 25 bzw. zwischen Schaftaufnahme 25 und Rahmen 31 und/oder Gabelschaft und Rahmen 31 ist wenigstens ein Lenkmomentbeeinflussungselement 86 angeordnet und dazu ausgebildet, ein zwischen Vorbau 20 und Rahmen 31 wirkendes und somit am Lenker 7 gegenüber dem Rahmen 31 anliegendes Lenkmoment M zu beeinflussen, das um eine Längsachse L der Schaftaufnahme 25 bzw. des hohlzylindrischen Bauteils 10 herum am Gabelschaft wirkt. Das Lenkmomentbeeinflussungselements 86 kann beispielsweise dazu ausgestaltet sein, dem Lenkmoment M entgegenzuwirken bzw. einen Lenkwiderstand zu erhöhen, indem es Mittel, wie beispielsweise Reib-, Druck- und/oder Passungsvorrichtungen zur Erzeugung eines Reib-, Kraft und/oder Formschlusses zwischen Schaftaufnahme 25 und Rahmen 31 und/oder Gabelschaft und Rahmen 31 beinhaltet. Im Extremfall kann das Lenkmomentbeeinflussungselements 86 die Schaftaufnahme 25 und/oder den Gabelschaft gegenüber dem Rahmen 31 verriegeln, um somit eine Art Lenkerschloss zur Sicherung des Elektrofahrrads 1 zu bilden. Alternativ oder zusätzlich kann das Lenkmomentbeeinflussungselement 86 das Lenkmoment M verstärken bzw. einen Lenkwiderstand herabsetzen, indem es Antriebsmittel, wie beispielsweise wenigstens einen Servomotor umfasst, der dazu ausgestaltet ist, dass Lenkmoment M zumindest teilweise aufzubringen bzw. im entgegenzuwirken.

Ferner ist in Fig. 4 ein Verlauf wenigstens einer Bremsleitung 87 ersichtlich, die von den Lenkerstutzen 22, 23 bis in die Schaftaufnahme 25 geführt ist. Die wenigstens eine Bremsleitung 87, in der Regel zwei Bremsleitungen 87, sind mit jeweils einem Bremshebel (nicht gezeigt) verbunden, der einem der Lenkergriffe 70 zugeordnet und dazu ausgestaltet ist, durch wenigstens einen Finger des Fahrers betätigt über die entsprechenden Bremsleitung 87 mit wenigstens einer Bremseinrichtung (nicht gezeigt) des Elektrofahrrads 1 zusammenzuwirken. Dazu kann die wenigstens eine Bremsleitungen 87 als Seilzug oder Hydraulikleitung ausgestaltet dazu ausgebildet sein, einen Bremszug bzw. Bremsdruck zur Bremseinrichtung zu übertragen.

Im vorliegenden Ausführungsbeispiel sind die Bremsleitungen 87 zusammen mit den Energie- und/oder Versorgungsleitungen 84 zumindest abschnittsweise im Inneren des Lenkers 7 geführt und können zur Verbindung mit dem jeweiligen Bremshebel durch die bereits oben erwähnten Austrittsöffnungen nach aussen geführt und dabei durch ein entsprechendes Leistungsdichteelement abdichtend umschlossen sein. Eine dem in Backbordrichtung B weisenden Lenkergriff 70 zugeordnete Bremsleitung 87 ist durch die Leitungsführung 27 verlaufend aus dem Lenkerstutzen 22 in den Hohlraum 26 und von dort aus in eine erste Durchführung 88 im Vorbau 20 geführt, durch die sie in die Gabel 9 gelangt und darin weiter bis zu einer am Vorderrad 6 wirkenden Vorderradbremse hin verlegt ist. Die erste Durchführung 88 verläuft im Wesentlichen entlang der Längsachse L zentral durch die Schaftaufnahme 25 bzw. einen darin aufgenommenen Gabelschaft bis in die Gabel 9. Eine dem in Steuerbordrichtung S weisenden Lenkergriff 70 zugeordnete Bremsleitung 87 ist durch die Leitungsführung 28 verlaufend aus dem Lenkerstutzen 23 in den Hohlraum 26 und von dort aus in eine zweite Durchführung 89 im Vorbau 20 geführt, durch die sie in den Rahmen 31 gelangt und darin weiter bis zu einer am Hinterrad 5 wirkenden Hinterradbremse hin verlegt ist. Die zweite Durchführung 89 ist aussen am hohlzylindrischen Bauteil 10 ausgeformt und verläuft dort entlang vom Hohlraum 26 aus bis in den Rahmen 31.

Fig. 5 zeigt ein Detail V aus Fig. 2, in dem insbesondere der Sattel 8 des Elektrofahrrads 1 dargestellt ist. Der Sattel 8 besitzt eine Sitzfläche 90, eine backbordseitige, sprich linke, erste Seitenfläche 91 und eine steuerbordseitige, sprich rechte, zweite Seitenfläche 92.

Ein erster Schenkelbogen 93 und ein zweiter Schenkelbogen 94 verbinden die erste Seitenfläche 91 bzw. die zweite Seitenfläche 92 mit einem backbordseitigen, sprich linken, ersten Sitzabschnitt 95 bzw. einem steuerbordseitigen, sprich rechten, zweiten Sitzabschnitt 96 der Sitzfläche 91. Zwischen den Sitzabschnitten 95, 96 verläuft eine Sitzmulde 97 im Wesentlichen parallel zu Fahrtrichtung V bzw. Rückrichtung H.

Wenigstens ein Schwingungselement 79 ist im Bereich der Sitzfläche 91 vorgesehen. Beispielsweise ist jeweils eines der Schwingungselemente 79 in den Sitzabschnitten 95, 96 unterhalb der Sitzfläche 91 angeordnet. Die in der Sitzfläche 91 angeordneten Schwingungselemente 79 sind vorteilhafterweise so angeordnet und ausgerichtet, das von Ihnen erzeugte Vibrationen im Bereich der jeweiligen Sitzbeine des Beckenknochens des Fahrers wirken und somit sehr effizient auf den Fahrer übertragbar und von ihm deutlich taktil wahrnehmbar sind.

Des Weiteren umfasst das Elektrofahrrad 1 wenigstens ein thermisches Sensorelement 98, um eine Temperatur zu messen. Dazu umfasst das wenigstens eine therm ische Sensorelement 98 wenigstens ein temperaturabhängig seinen elektrischen Widerstand änderndes und/oder direkt ein verarbeitbares Signal lieferndes elektrisches oder elektronisches Bauelement, wie beispielsweise Heissleiter (NTC), Kaltleiter (PTC), Halbleiter-Temperatursensor, Thermoelement, Temperaturschalter, einen ferromagnetischen Temperatursensor und/oder einen faseroptischen Temperatursensor o. ä. Das wenigstens eine thermische Sensorelement 98 ist im vorliegenden Ausführungsbeispiel am Sattel 8 des Elektrofahrrads 1 angeordnet. Beispielsweise ist das wenigstens eine thermische Sensorelemente 98 im Bereich der Sitzfläche 91 bzw. in der Sitzmulde 98 angeordnet. Alternativ oder zusätzlich kann wenigstens ein weiteres thermische Sensorelemente 98 an einen den jeweiligen Anforderungen entsprechend ausgewählten weiteren Ort des Elektrofahrrads 1 angeordnet sein, so wie beispielsweise im Bereich der Lenkergriffe 70 und/oder im Bereich der Energiespeichervorrichtung 2.

Ferner ist wenigstens eine Klimatisierungsvorrichtung 80 im Bereich des Schenkelbogens 93, 94 und/oder der Sitzmulde 97 angeordnet, um den Sattel 8 zu klimatisieren. So ist beispielsweise jeweils wenigstens eine Klimatisierungsvorrichtung 80 im Bereich der Schenkelbögen 93, 94 vorteilhafterweise so angeordnet, dass sie nahe den im jeweiligen Schenkel des Fahrers verlaufenen Hauptblutgefässen, wie beispielsweise der Arteria femoralis und/oder Vena femoralis eine Klimatisierungswirkung entfaltet, um eine möglichst weit reichende Klimatisierungsfunktion für den Fahrer zu bewirken. Wenigstens eine im Bereich der Sitzmulde 80 angeordnete Klimatisierungsvorrichtung 80 ist vorteilhaftes Weise so angeordnet, dass sie im Bereich des Scham beins des Beckenknochens des Fahrers eine Klimatisierungswirkung entfaltet. Alternativ oder zusätzlich kann die wenigstens eine Klimatisierungsvorrichtung 80 im Sattel 9 mit einem im Sattel vorhandenen Fluid, beispielsweise einem Gel Zusammenwirken, um dieses zu klimatisierenden bzw. klimatisiertes Fluid umzuwälzen, damit es beispielsweise die Sitzfläche 90, die Schenkelbögen 93, 94 und/oder die Sitzmulde 97 temperiert.

Bei relativ hohen Aussentemperaturen können derart angeordnete Klimatisierungsvorrichtungen 80 eine als angenehm und erfrischend empfundene Kühlung des Fahrers herbeiführen helfen. Bei relativ niedrigen Aussentemperaturen hingegen kann der Sattel 9 angenehm beheizt werden. Auch kann der Sattel 9 insbesondere durch eine im Bereich der Sitzfläche 91 bzw. der Sitzmulde 97 angeordneten Klimatisierungsvorrichtung 80 vortemperiert werden, wenn bei einem abgestellten, d. h. nicht in Benutzung befindlichen Elektrofahrrad 1, eine Temperatur des Sattels 9, insbesondere der Sitzfläche 91, bei relativ niedrigen Aussentemperaturen als unangenehm empfunden weit unterhalb der Körpertemperatur des Fahrers oder bei relativ hohen Aussentemperaturen bzw. direkt auf den Sattel 9 einwirkender Sonneneinstrahlung, als unangenehm empfunden weit oberhalb der Körpertemperatur des Fahrers liegt.

Im oder am Sattel 9 angeordnete Schwingungselemente 79 und/oder Klimatisierungsvorrichtungen 80 sind durch wenigstens eine Energie- und/oder Signalübertragungsleitung 84 mit der Energiespeichervorrichtung 2 und/oder der Steuereinheit 60 energie-und/oder signalübertragend verbunden. Vorteilhafterweise ist die wenigstens eine Energie- und/oder Signalübertragungsleitungen 84 innerhalb einer Sattelstütze 99 verlegt, die den Sattel 9 mechanisch mit dem Rahmen 31 des Elektrofahrrads 1 verbindet. Die Sattelstütze 99 ist im Sattelrohr 34 des Rahmens 31 aufgenommen. Die wenigstens eine Energie- und/oder Signalübertragungsleitung 84 verläuft vom Sattel 8 aus durch die Sattelstütze 99 in das Sattelrohr 34 und von dort aus weiter zur Energiespeichervorrichtung 2 und/oder Steuereinheit 60.

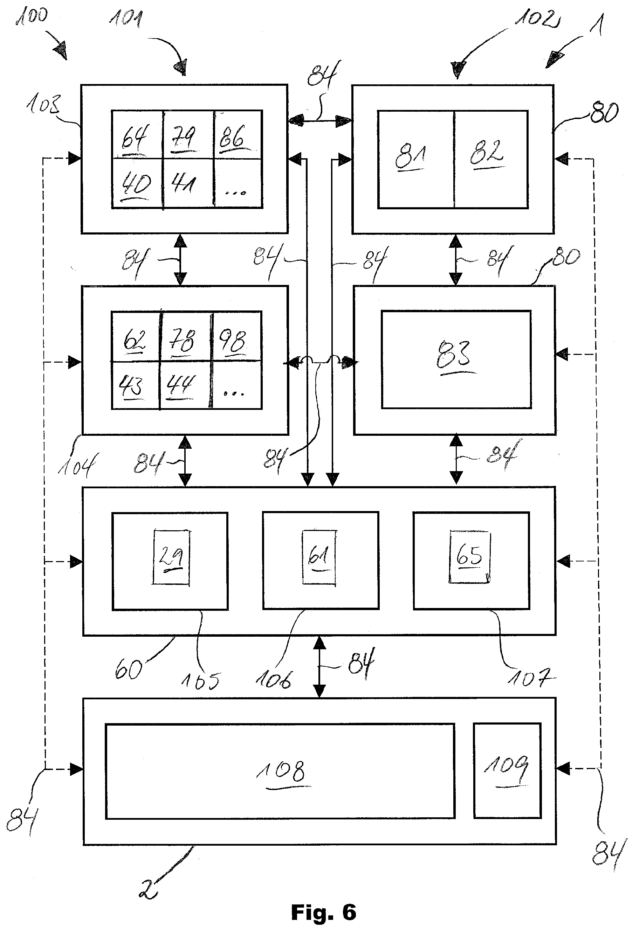

Fig. 6 zeigt eine schematische Diagrammdarstellung eines Kommunikationssystems 100 des Elektrofahrrads 1. Das Kommunikationssystem 100 umfasst die Energiespeichervorrichtung 2, die Steuereinheit 60 sowie eine Kommunikationseinrichtung 101 und eine Klimatisierungseinrichtung 102, die jeweils parallel und/oder seriell über jeweilige Energie- und/oder Signalleitungen 84 des Kommunikationssystems 100 miteinander verbunden sind.

Die Kommunikationseinrichtung 101 umfasst eine Signalvorrichtung 103 und eine Sensorvorrichtung 104. Die Signalvorrichtung 103 umfasst wenigstens eine Vorderlampe 40, wenigstens ein Rücklicht 41, wenigstens ein Leuchtelement 64, wenigstens ein Schwingungselemente 79 und/oder wenigstens ein Lenkmomentbeeinflussungselement 86. Die Sensorvorrichtung 104 umfasst wenigstens einen vorderen Näherungssensor 43, wenigstens einen hinteren Näherungssensor 44, wenigstens eine Bedieneinheit 62 mit wenigstens einem Bedienknopf 63, wenigstens ein taktiles Sensorelement 78 und/oder wenigstens ein thermisches Sensorelement 98. Die Klimatisierungseinrichtung 102 umfasst wenigstens ein Kühlelement 81, wenigstens ein Heizelement 82 und/oder wenigstens ein Latentwärmespeicherelement 83, die gemeinsam bzw. in Kombination miteinander oder für sich allein genommen wenigstens eine Klimatisierungsvorrichtung 80 des Elektrofahrrads 1 bilden.

Die Steuereinheit 60 umfasst wenigstens ein Verarbeitungsmodul 105, wenigstens ein Steuermodul 106 und/oder wenigstens ein Kommunikationsmodul 107. Das Verarbeitungsmodul 105 umfasst zumindest das wenigstens eine elektronische Bauteil 29 oder ist zumindest energie- und/oder signalübertragend mit dem wenigstens ein elektronischer Bauteil 29 verbunden. Das Steuermodul 106 umfasst zumindest die wenigstens eine Anzeigeeinrichtung 61 oder ist zumindest energie- und/oder signalübertragend mit der wenigstens ein Anzeigeeinrichtung 61 verbunden. Das Kommunikationsmodul 107 umfasst die wenigstens einen Adapter 65 oder ist zumindest energie- und/oder signalübertragend mit dem wenigstens einen Adapter 64 verbunden und dazu ausgestaltet über den Adapter 64 oder sonstige beliebige kabelgebundene oder kabellose Kommunikationsmittel mit einem Mobilgerät, einem Datenspeicher und/oder einer medizinischen Vorrichtung zu kommunizieren (s. Fig. 7).

Die Energiespeichervorrichtung 2 umfasst einen Antriebsenergiespeicher 108 und einen Ersatzenergiespeicher 109. Der Antriebsenergiespeicher 108 ist beispielsweise als Antriebsbatterie in Form eines Akkumulators, kurz Akku, ausgestaltet. Im Antriebsenergiespeicher 108 kann Antriebsenergie, beispielsweise elektrischer Strom, zum Betrieb des Elektroantriebs 3 und/oder des Kommunikationssystems 100 gespeichert sein. In einem Antriebsmodus des Elektrofahrrads 1 wird der Elektroantrieb 3 aus dem Antriebsenergiespeicher 108 gespeist. In einem Rekuperationsmodus des Elektrofahrrads 1 wird der Antriebsenergiespeicher 108 mit im Elektroantrieb 3 gewonnener elektrischer Energie gespeist. Der Ersatzenergiespeicher 109, beispielsweise als Ersatz- bzw. Pufferbatterie in Form eines Akkumulators ausgestaltet, dient zur Versorgung des Kommunikationssystems 100 mit elektrischem Strom im Falle eines kritischen Entladezustands des Antriebsenergiespeichers 108 und/oder wenn der Antriebsenergiespeicher 108 vom Elektrofahrrad 1 getrennt ist.

Fig. 7 zeigt eine schematische Diagrammdarstellung einer Kommunikationsanordnung 200 miteinem Elektrofahrrad 1. Die Kommunikationsanordnung 200 umfasst wenigstens ein Gerät 201, beispielsweise ein Mobilgerät, wie ein Mobiltelefon oder Smartphone, ein Datenspeicher und/oder eine medizinische Vorrichtung, und eine Verwaltungseinrichtung 202, die mit über ein Netzwerk 203 hergestellten Kommunikationsverbindungen 204 miteinander kommunizieren. Das Gerät 201 und die Verwaltungseinrichtung 202 können auf beliebigen den jeweiligen Anforderungen entsprechenden elektronischen Geräten, wie Computern, Smartphones, Handhelds, Tabletts samt entsprechender Peripheriegeräte usw., als Hardware- und/oder Software implementiert sein und jeweils ein Steuerungsmodul 205 sowie entsprechende Einrichtungen zum Aufbau der Kommunikationsverbindungen 104 umfassen, um über das Netzwerk 103 mit dem Kommunikationsmodul 107 des Elektrofahrrads 1 verbunden zu sein und somit mit der Steuerungseinheit 60 und/oder dem Kommunikationssystem 100 des Elektrofahrrads 1 datenaustauschend zusammenzuwirken.

Insbesondere können somit Informationen und Signale umfassend die Fahrzeugparameter 210, Navigationsparameter 211, Bedien-, Warn-, Hinweis-, und/oder Steuerungssignale 212, elektronische Sicherungsschlüssel 213 sowie Fahrzeugkennungen 214 zwischen dem Elektrofahrrad 1 bzw. dessen Kommunikationssystem 100, dem Gerät 201 und/oder der Verwaltungseinrichtung 202 ausgetauscht werden, um im Steuerungsmodul 105, Registrierungsmodul 206 und/oder Alarmdatenbankmodul 207 verwaltet, bearbeitet und/oder gespeichert zu werden. Dabei können die Informationen und Signale, insbesondere die Fahrzeugparameter 210, Navigationsparameter 211 und/oder Bedien-, Warn-, Hinweis-, und/oder Steuerungssignale 212 mit Hilfe der Signalvorrichtung 103 und/oder der Sensorvorrichtung 104 ausgegeben bzw. erzeugt werden und/oder zur Steuerung der Kommunikationseinrichtung 101 sowie der Klimatisierungseinrichtung 102 einerseits sowie zur Steuerung des Geräts 201 und/oder der Verwaltungseinrichtung 202 andererseits verwendet werden.

Dazu umfassen Steuereinheit 60, Gerät 201 und/oder Verwaltungseinreichung 202 den jeweiligen Anforderungen gemäss wenigstens einen Mikroprozessor oder einen andersartigen Prozessor und wenigstens ein computerlesbares Medium, das computerlesbaren Programmcode beinhaltet (z.B. Software und/oder Firmware), der vom wenigstens einen (Mikro-) Prozessor ausführbar ist, sowie z.B. logische Gatter, Schalter, applikationsspezifische integrierte Schaltungen (ASIC) und/oder programmierbare logische Controller. Die Energie- und/oder Signalübertragungsleitungen 84 sowie Kommunikationsverbindungen können den jeweiligen Anforderungen gemäss ausgestaltet sein, um kabellos und/oder kabelgebunden Verbindungen zur Energie- und/oder Signal- bzw. Informationsübertragung zwischen entsprechenden Elementen sowie Komponenten des Elektrofahrrads 1, des Kommunikationssystems 100 und/oder der Kommunikationsanordnung 200 herzustellen, z.B. mit Hilfe von elektrische leitender Verbindungen, optischer Verbindungen, Funkverbindungen und dergleichen, die den jeweiligen Anforderungen gemäss digital und/oder analoge Signale verwenden können, um jeweilige Funktionen gemeinsam und für sich genommen auszuführen.

### Bezugszeichenliste

- 1: Elektrofahrrad / Fahrzeug
- 2: Energiespeichervorrichtung
- 3: Elektroantrieb
- 4: Pedalantrieb
- 5: Hinterrad
- 6: Vorderrad
- 7: Lenker
- 8: Sattel
- 9: Gabel
- 10: hohlzylindrisches Bauteil
- 11: innerer Hohlraum
- 15, 16: Leitungsaufnahme
- 20: Vorbau
- 22, 23: Lenkerstutzen
- 25: Schaftaufnahme
- 26: Hohlraum
- 27, 28: Leitungsführung
- 29: elektronisches Bauteil
- 31: Rahmen/Fahrradrahmen
- 32: Oberrohr
- 33: Unterrohr
- 34: Sattelrohr
- 35: oberes Rohr
- 36: Hinterbau
- 37: unteres Rohr
- 40: Vorderlam pe
- 41: Rücklicht
- 42: Schutzblech
- 43: vorderer Näherungssensor
- 44: hinterer Näherungssensor
- 50: Kurbel
- 51: Pedal
- 60: Steuereinheit
- 61: Anzeigeeinrichtung
- 62: Bedieneinheit
- 63: Bedienknopf
- 64: Leuchtelement
- 65: Adapter
- 70: Lenkergriff
- 71: Lenkerrohr
- 72: Auflagebereich
- 73: Griffendbereich
- 74: innerer Fingerbereich
- 75: mittlerer Fingerbereich
- 76: äusserer Fingerbereich
- 77: Freiraum
- 78: taktiles Sensorelement
- 79: Schwingungselement
- 80: Klimatisierungsvorrichtung
- 81: Kühlelement
- 82: Heizelement
- 83: Latentwärmespeicherelement
- 84: Energie- und/oder Signalübertragungsleitung
- 85: Schallerzeugungselement
- 86: Lenkmomentbeeinflussungselement
- 87: Bremsleitung
- 88: erste Durchführung
- 89: zweite Durchführung
- 90: Sitzfläche
- 91: erste Seitenfläche
- 92: zweite Seitenfläche
- 93: erster Schenkelbogen
- 94: zweiter Schenkelbogen
- 95: erster Sitzabschnitt
- 96: zweiter Sitzabschnitt
- 97: Sitzmulde
- 98: thermisches Sensorelement
- 99: Sattelstütze

- 100: Kommunikationssystem
- 101: Kommunikationseinrichtung
- 102: Klimatisierungseinrichtung
- 103: Signalvorrichtung
- 104: Sensorvorrichtung
- 105: Verarbeitungsmodul
- 106: Steuermodul
- 107: Kommunikationsmodul
- 108: Antriebsenergiespeicher
- 109: Ersatzenergiespeicher

- 200: Kommunikationsanordnung
- 201: Gerät
- 202: Verwaltungseinrichtung
- 203: Netzwerk
- 204: Kommunikationsverbindung
- 205: Steuerungsmodul
- 206: Registrierungsmodul
- 207: Alarmdatenbankmodul
- 210: Fahrzeugparameter
- 211: Navigationsparameter
- 212: Warn-, Hinweis-, und/oder Steuerungssignale
- 213: Sicherungsschlüssel
- 214: Fahrzeugkennung

- B: Backbordrichtung / links
- H: Rückrichtung / hinten
- L: Längsachse
- M: Lenkmoment
- S: Steuerbordrichtung / rechts
- V: Fahrtrichtung / vorne

## Patentansprüche

1. Elektrofahrrad (1) mit einem Kommunikationssystem (100), das wenigstens ein elektronisches Verarbeitungsmodul (105) zur Verarbeitung von Informationen für den Fahrer des Elektrofahrrades (1), und wenigstens eine Signalvorrichtung (103) zur Bereitstellung der verarbeiteten Informationen an den Fahrer umfasst,
wobei die wenigstens eine Signalvorrichtung (103) dazu ausgebildet ist, die Informationen zur spontanen Beeinflussung des Fahrers als vom Elektrofahrrad (1) abgegebenes taktiles, optisches, und/oder akustisches Signal auszugeben,
**gekennzeichnet durch**
eine Klimatisierungsvorrichtung (80), die wenigstens ein Heizelement (82) und ein Kühlelement (81) zum Heizen bzw. Kühlen eines Griffes (70) umfasst, wobei die Klimatisierungsvorrichtung (80) im Griffbereich eine Funktion in Abhängigkeit eines ordnungsgemässen Umgreifens steuert, indem eine Klimatisierungsfunktion der Klimatisierungsvorrichtung (80) unterbunden wird, wenn wenigstens ein Griff (70) nicht umgriffen ist.

2. Elektrofahrrad (1) nach Anspruch 1, **dadurch gekennzeichnet, dass** das Verarbeitungsmodul (105) Teil einer zentralen elektronischen Steuereinheit (60) des Elektrofahrrads (1) und/oder informationsübertragend mit der Steuereinheit (60) verbunden ist.

3. Elektrofahrrad (1) nach Anspruch 1 oder 2, **dadurch gekennzeichnet, dass** das Elektrofahrrad (1) mit einer Antriebsenergie bereitstellenden Energiespeichervorrichtung (2) ausrüstbar ist, wobei das Kommunikationssystem (100) betriebsenergieempfangend mit der Energiespeichervorrichtung (2) verbunden ist.

4. Elektrofahrrad (1) nach wenigstens einem der oben genannten Ansprüche, **dadurch gekennzeichnet, dass** das Kommunikationssystem (100) zumindest teilweise in einen Lenker (7) und/oder Vorbau (20) des Elektrofahrrades (1) integriert ist.

5. Elektrofahrrad (1) nach wenigstens einem der oben genannten Ansprüche, **dadurch gekennzeichnet, dass** das Kommunikationssystem (100) zumindest teilweise in einen Rahmen (31) des Elektrofahrrades (1) integriert ist.

6. Elektrofahrrad (1) nach wenigstens einem der oben genannten Ansprüche, **dadurch gekennzeichnet, dass** die wenigstens eine Signalvorrichtung (103) ausgebildet ist, ein Signal auszugeben, wenn die Information eine Gefahrensituation repräsentiert.

7. Elektrofahrrad (1) nach wenigstens einem der oben genannten Ansprüche, **dadurch gekennzeichnet, dass** das Kommunikationssystem (100) mindestens einen Näherungssensor (43, 44) zur Erfassung eines sich nähernden Objektes aufweist, wobei der Näherungssensor (43, 44) signalübertragend mit dem Verarbeitungsmodul (105) verbunden ist.

8. Elektrofahrrad (1) nach wenigstens einem der oben genannten Ansprüche, **dadurch gekennzeichnet, dass** das Verarbeitungsmodul (105) zur Verarbeitung von Richtungsinformationen und/oder Abstandsinformationen ausgebildet ist.

9. Elektrofahrrad (1) nach wenigstens einem der oben genannten Ansprüche, **dadurch gekennzeichnet, dass** das Verarbeitungsmodul (105) zur Verarbeitung von Navigationsinformationen ausgebildet ist.

10. Elektrofahrrad (1) nach wenigstens einem der oben genannten Ansprüche, **dadurch gekennzeichnet, dass** das Signal ein Lichtsignal, ein Schwingungssignal, eine Lenkwiderstandsänderung und/oder eine Temperaturänderung umfasst.

11. Elektrofahrrad (1) nach wenigstens einem der oben genannten Ansprüche, **dadurch gekennzeichnet, dass** die Signalvorrichtung (103) dazu ausgestaltet ist, mit Schwingungselementen (79) im Lenker (7), in den Pedalen (51) und/oder einem Sattel (8) des Elektrofahrrades (1) zusammenzuwirken.

12. Elektrofahrrad (1) nach Anspruch 11, **dadurch gekennzeichnet, dass** die Signalvorrichtung (103) ausgebildet ist, mit wenigstens zwei Schwingungselementen (79) zusammenzuwirken, die den Lenkergriffen (70) des Elektrofahrrades (1) zugeordnet sind.

13. Elektrofahrrad (1) nach wenigstens einem der oben genannten Ansprüche, **dadurch gekennzeichnet, dass** die Signalvorrichtung (103) ausgebildet ist, den Lenkwiderstand mittels eines Lenkmomentbeeinflussungselements (86) zu beeinflussen.

14. Elektrofahrrad (1) nach wenigstens einem der oben genannten Ansprüche, **gekennzeichnet, durch** ein Kommunikationsmodul (107) zur Abgabe und/oder zum Empfang von Informationen von Mobilgeräten, Datenspeichern und/oder medizinischen Vorrichtungen.

15. Elektrofahrrad (1) nach wenigstens einem der oben genannten Ansprüche, **dadurch gekennzeichnet, dass** taktile Sensorelemente (78) dazu ausgestaltet sind, zu erkennen, ob der Fahrer den Lenkergriff (70) umgreift, um in Abhängigkeit davon Steuerfunktionen auszuüben.

## Claims

1. An electric bicycle (1) with a communication system (100), comprising at least one electronic processing module (105) for processing information for the rider of the electric bicycle (1), and at least one signaling device (103) for providing the processed information to the rider,
wherein the at least one signaling device (103) is configured to output the information as a tactile, optical, and/or acoustic signal emitted by the electric bicycle (1) to spontaneously influence the rider,
**characterized by**
a climate control device (80) comprising at least one heating element (82) and one cooling element (81) for heating or cooling a grip (70), wherein the climate control device (80) controls a function in the grip area depending on proper gripping by disabling a climate control function of the climate control device (80) when at least one grip (70) is not gripped.

2. The electric bicycle (1) according to claim 1, **characterized in that** the processing module (105) is part of a central electronic control unit (60) of the electric bicycle (1) and/or is connected to the control unit (60) for data transmission.

3. The electric bicycle (1) according to claim 1 or 2, **characterized in that** the electric bicycle (1) can be equipped with an energy storage device (2) that provides drive energy, wherein the communication system (100) is connected to the energy storage device (2) to receive operating energy.

4. The electric bicycle (1) according to at least one of the above claims, **characterized in that** the communication system (100) is at least partially integrated into a handlebar (7) and/or stem (20) of the electric bicycle (1).

5. The electric bicycle (1) according to at least one of the above claims, **characterized in that** the communication system (100) is at least partially integrated into a frame (31) of the electric bicycle (1).

6. The electric bicycle (1) according to at least one of the above claims, **characterized in that** the at least one signaling device (103) is configured to emit a signal when the information represents a hazardous situation.

7. The electric bicycle (1) according to at least one of the above claims, **characterized in that** the communication system (100) comprises at least one proximity sensor (43, 44) for detecting an approaching object, wherein the proximity sensor (43, 44) is connected to the processing module (105)via a signal transmission link.

8. The electric bicycle (1) according to at least one of the above claims, **characterized in that** the processing module (105) is configured to process directional information and/or distance information.

9. The electric bicycle (1) according to at least one of the above claims, **characterized in that** the processing module (105) is configured to process navigation information.

10. The electric bicycle (1) according to at least one of the above claims, **characterized in that** the signal comprises a light signal, a vibration signal, a change in steering resistance, and/or a change in temperature.

11. The electric bicycle (1) according to at least one of the above claims, **characterized in that** the signal device (103) is configured to interact with vibration elements (79) in the handlebar (7), the pedals (51), and/or a saddle (8) of the electric bicycle (1).

12. The electric bicycle (1) according to claim 11, **characterized in that** the signal device (103) is configured to interact with at least two vibration elements (79) associated with the handlebar grips (70) of the electric bicycle (1).

13. The electric bicycle (1) according to at least one of the above claims, **characterized in that** the signaling device (103) is configured to influence the steering resistance by means of a steering torque influencing element (86).

14. The electric bicycle (1) according to at least one of the above claims, **characterized by** a communication module (107) for transmitting and/or receiving information from mobile devices, data storage devices, and/or medical devices.

15. The electric bicycle (1) according to at least one of the above claims, **characterized in that** tactile sensor elements (78) are configured to detect whether the rider is gripping the handlebar grip (70) in order to perform control functions depending thereon.

## Revendications

1. Vélo électrique (1) comprenant un système de communication (100) qui comprend au moins un module (105) de traitement électronique pour traiter des informations destinées au cycliste du vélo électrique (1), et au moins un dispositif de signalisation (103) pour fournir les informations traitées au cycliste,
dans lequel l'au moins un dispositif de signalisation (103) est conçu pour diffuser les informations sous forme de signal tactile, optique et/ou acoustique émis par le vélo électrique (1) afin d'influencer spontanément le cycliste,
**caractérisé par**
un dispositif de climatisation (80) qui comprend au moins un élément chauffant (82) et un élément de refroidissement (81) pour chauffer ou refroidir une poignée (70), le dispositif de climatisation (80) commandant une fonction dans la zone de poignée en fonction d'une prise en main correcte, en empêchant une fonction de climatisation du dispositif de climatisation (80) lorsqu'au moins une poignée (70) n'est pas saisie.

2. Vélo électrique (1) selon la revendication 1, **caractérisé en ce que** le module de traitement (105) fait partie d'une unité de commande (60) électronique centrale du vélo électrique (1) et/ou est relié à l'unité de commande (60) pour la transmission d'informations.

3. Vélo électrique (1) selon la revendication 1 ou 2, le vélo électrique (1) étant **caractérisé en ce qu'**il peut être équipé d'un dispositif (2) de stockage d'énergie fournissant l'énergie d'entraînement, dans lequel le système de communication (100) est relié au dispositif (2) de stockage d'énergie de manière à recevoir l'énergie de fonctionnement.

4. Vélo électrique (1) selon au moins l'une des revendications précédentes, **caractérisé en ce que** le système de communication (100) est au moins partiellement intégré dans un guidon (7) et/ou une potence (20) du vélo électrique (1).

5. Vélo électrique (1) selon au moins l'une des revendications précédentes, **caractérisé en ce que** le système de communication (100) est au moins partiellement intégré dans un cadre (31) du vélo électrique (1).

6. Vélo électrique (1) selon au moins l'une des revendications précédentes, **caractérisé en ce que** l'au moins un dispositif de signalisation (103) est conçu pour diffuser un signal lorsque l'information représente une situation dangereuse.

7. Vélo électrique (1) selon au moins l'une des revendications précédentes, **caractérisé en ce que** le système de communication (100) comprend au moins un capteur de proximité (43, 44) pour détecter un objet qui s'approche, dans lequel le capteur de proximité (43, 44) est relié au module de traitement (105) par transmission de signaux.

8. Vélo électrique (1) selon au moins l'une des revendications précédentes, **caractérisé en ce que** le module de traitement (105) est conçu pour traiter des informations de direction et/ou des informations de distance.

9. Vélo électrique (1) selon au moins l'une des revendications précédentes, **caractérisé en ce que** le module de traitement (105) est conçu pour traiter des informations de navigation.

10. Vélo électrique (1) selon au moins l'une des revendications précédentes, **caractérisé en ce que** le signal comprend un signal lumineux, un signal vibratoire, une modification de la résistance de direction et/ou une modification de la température.

11. Vélo électrique (1) selon au moins l'une des revendications précédentes, **caractérisé en ce que** le dispositif de signalisation (103) est conçu pour coopérer avec des éléments vibrants (79) dans le guidon (7), les pédales (51) et/ou une selle (8) du vélo électrique (1).

12. Vélo électrique (1) selon la revendication 11, **caractérisé en ce que** le dispositif de signalisation (103) est conçu pour coopérer avec au moins deux éléments vibrants (79) qui sont associés aux poignées du guidon (70) du vélo électrique (1).

13. Vélo électrique (1) selon au moins l'une des revendications précédentes, **caractérisé en ce que** le dispositif de signalisation (103) est conçu pour influencer la résistance de direction au moyen d'un élément (86) d'influence du couple de direction.

14. Vélo électrique (1) selon au moins l'une des revendications précédentes, **caractérisé par** un module de communication (107) pour diffuser et/ou recevoir des informations provenant d'appareils mobiles, de dispositifs de stockage de données et/ou de dispositifs médicaux.

15. Vélo électrique (1) selon au moins l'une des revendications précédentes, **caractérisé en ce que** des éléments capteurs (78) tactiles sont conçus pour détecter si le cycliste saisit la poignée du guidon (70) afin d'accomplir des fonctions de commande en fonction de cela.
